# EUROPÄISCHE PATENTSCHRIFT

(11) **EP 3 713 649 B1**
(45) Veröffentlichungstag und Bekanntmachung des Hinweises auf die Patenterteilung: **11.05.2022**
(21) Anmeldenummer: 19752684.1
(22) Anmeldetag: 08.08.2019
(51) Int. Cl.: A62C 37/50, A62C 35/68, A62C 35/58, G08B 29/12

(54) **WASSERLÖSCHANLAGE UND ZUGEHÖRIGES VERFAHREN ZUM KONTROLLIEREN DER WASSERLÖSCHANLAGE**
WATER EXTINGUISHING SYSTEM AND METHOD TO CONTROL THE WATER EXTINGUISHING SYSTEM
INSTALLATION D'EXTINCTION À EAU ET PROCÉDÉ CORRESPONDANT POUR LE CONTRÔLE DE L'INSTALLATION D'EXTINCTION À EAU

(30) Priorität: 14.08.2018 DE 102018119776
(43) Veröffentlichungstag der Anmeldung: 30.09.2020
(73) Patentinhaber: Minimax Viking Research & Development GmbH, 23840 Bad Oldesloe (DE)
(72) Erfinder: BÖKE, Joachim, 23840 Bad Oldesloe (DE); FRIEDE, Frank, 23840 Bad Oldesloe (DE); BLUDAU, Stephan, 23840 Bad Oldesloe (DE)
(74) Vertreter: Eisenführ Speiser
(86) Internationale Anmeldenummer: PCT/EP2019/071299
(87) Internationale Veröffentlichungsnummer: WO 2020/035385

(56) Entgegenhaltungen:
- EP-A1- 1 721 639
- JP-A- H0 686 838
- KR-A- 20110 131 948

## Beschreibung

Die vorliegende Erfindung betrifft eine Wasserlöschanlage sowie ein Verfahren zum Kontrollieren einer solchen Wasserlöschanlage. Wasserlöschanlagen im Sinne der Erfindung sind insbesondere Sprinkler-, Sprühwasser- und Schaumlöschanlagen, wobei die Erfindung nicht auf besondere Arten von Wasserlöschanlagen beschränkt ist.

Die vorliegende Erfindung betrifft insbesondere Wasserlöschanlagen umfassend a) eine Fluidversorgung zur Bereitstellung eines Löschfluids b) mindestens eine Pumpe, die zum Fördern des Löschfluids aus der Fluidversorgung in ein Verteilerrohr eingerichtet ist und c) eine Probierleitung, die von dem Verteilerrohr abzweigt und dazu eingerichtet ist, das von der Pumpe geförderte Löschfluid zu leiten, wobei die Probierleitung ein Öffnungsorgan aufweist, das dazu eingerichtet ist, die Probierleitung bei einem Testlauf der Pumpe zu öffnen.

Derartige Wasserlöschanlagen unterliegen unter anderem den in VdS 2212 beschriebenen Vorschriften. Insbesondere sieht Absatz 1.3.4 der VdS 2212 wöchentliche Kontrollen an der Wasserlöschanlage durch den Anlagenbetreiber vor. Unter anderem umfassen die wöchentlichen Tests eine Kontrolle des Pumpenstarts der Pumpe, die der Förderung des Löschfluids dient. Hierfür muss ein Testlauf erfolgen, der so lange andauern muss, bis die normalen Betriebskennwerte der Pumpe erreicht sind.

Zu diesem Zweck ist in solchen Wasserlöschanlagen die Probierleitung vorgesehen, die eine Pumpenprüfung ermöglicht und hierbei vermeidet, dass das Löschfluid während des wöchentlich erforderlichen Pumpentests der Pumpe zu einer wöchentlichen Flutung der durch die Wasserlöschanlage überwachten Bereiche führt.

In diesem Zusammenhang wird unter der Fluidversorgung eine Kombination aus einem oder mehreren Elementen verstanden, die dazu dienen die Wasserlöschanlage mit Löschfluid zu versorgen. Die Löschfluidversorgung kann hierzu insbesondere eine Trinkwasserversorgung umfassen, aus der Trinkwasser als Löschfluid der Wasserlöschanlage zugeführt werden kann. Alternativ oder zusätzlich kann die Löschfluidversorgung einen Vorratsbehälter umfassen, in dem das Löschfluid bevorratet werden kann. In einigen Ausführungsformen ist die Probierleitung hierbei so eingerichtet, dass sie das durch sie hindurchflie-ßende Löschfluid wieder in einen Vorratsbehälter und/oder einen Zwischenbehälter leitet, der als Teil der Fluidversorgung eingerichtet ist. So kann das während des Testlaufs durch die Probierleitung geführte Löschfluid weiterhin durch die Wasserlöschanlage verwendet werden. In einigen Ausführungsformen kann das durch die Probierleitung geführte Löschfluid auch in einen Abwasserbehälter geleitet und/oder über eine Abwasserleitung abgeführt und nicht bevorratet werden.

Gemäß dem Stand der Technik wird der wöchentliche Testlauf der Pumpe durch eine geschulte Person händisch bzw. manuell ausgeführt. Hierzu wird zunächst die Probierleitung durch Öffnen des Öffnungsorgans freigegeben. Anschließend wird eine Starteinrichtung verwendet, um einen Pumpenstart der Pumpe auszulösen. Dieser Start kann hierbei automatisch erfolgen oder manuell durchgeführt werden. Anschließend wird der Startdruck, welcher dem Druck zum Zeitpunkt des Anlaufens der Pumpe entspricht, gemessen und aufgezeichnet und der Testlauf durchgeführt werden, bis die normalen Betriebskennwerte des Antriebsmotors der Pumpe erreicht sind. Danach wird die Probierleitung mittels des Öffnungsorgans wieder verschlossen und es kann kein weiteres Löschfluid in die Probierleitung geraten.

Im Kontext dieses Dokumentes werden die beispielsweise nach VdS CEA 4001: 2014-04 üblichen technischen Definitionen vorausgesetzt.

Insbesondere wird hierbei unter einer Probierleitung eine Wassermesseinrichtung, umfassend ein Durchflussmessgerät, Beruhigungsstrecken, und Regulierschieber zur Prüfung der Wasserrate, verstanden. Die Probierleitung ist hierbei bevorzugt als Abzweigung von dem Verteilerrohr hinter der Pumpe, das der Versorgung des Rohrnetzes dient, vorgesehen.

Eine Alarmventilstation beschreibt insbesondere eine Baugruppe, die ein Alarmventil und sämtliche dazugehörigen Ventile und Zubehör für die Steuerung einer Sprinklergruppe umfasst.

Ein Verteilerrohr beschreibt insbesondere ein Rohr, das entweder ein Strangrohr direkt speist oder einen einzelnen Sprinkler auf einem Strangrohr, das kein Endrohr und über 300 mm lang ist.

Unter dem Begriff Löschfluid wird mithin ein Fluid verstanden, dass der Löschung und/oder Bekämpfung von Bränden dient. Bei diesem Löschfluid kann es sich insbesondere um Löschwasser handeln, das mit oder ohne Zusätze bereitgestellt wird. In einigen Ausführungen kann das Löschfluid insbesondere einen Schaum, ein Anti-Gefriermittel oder ähnliches enthalten. Die Zusätze sollten hierbei nach Möglichkeit so gewählt werden, dass sie für die jeweilige Anwendung der Wasserlöschanlage optimal sind. In einigen Ausführungen kann das Löschfluid auch reines Löschwasser sein. Weitere Löschfluide sind ebenfalls denkbar.

Unter einem Öffnungsorgan kann insbesondere ein Schiebeelement innerhalb einer Öffnungseinheit, wie beispielsweise einem Ventil, verstanden werden, welches gemäß dem Stand der Technik manuell betätigt werden kann. Ein Öffnen wird hierbei durch Verschieben des Schiebeelements von einer Verschluss- in eine Öffnungsposition bewirkt. Durch das Öffnen des Absperrorgans in der Probierleitung wird ein Volumenstrom durch die Probierleitung ermöglicht, mittels dessen der Testlauf durchgeführt werden kann. Ein Schließen erfolgt sodann durch Verschieben des Schiebeelements aus der Öffnungs- in die Verschlussposition. Dadurch wird der Volumenstrom durch das Ventil wieder unterbrochen.

Bei Ausführung eines Testlaufes besteht die Gefahr, dass es während des Testlaufs zu einem Brand kommt und die Wasserlöschanlage auslöst. In so einem Fall wird die zur Verfügung stehende Menge an Löschfluid, die durch die Pumpe gefördert wird, um die Wassermenge reduziert, die durch die offene bzw. nicht verschlossene Probierleitung strömt. Dieser indifferente Zustand verhindert bislang, dass die arbeitsintensiven wöchentlichen Kontrollen automatisiert werden können und führt zu einem erhöhten Risiko einer Fehlversorgung der Wasserlöschanlage mit Löschfluid, beispielsweise aufgrund von menschlichem Versagen. Insbesondere wird durch die Notwendigkeit, die Probierleitung manuell zu schließen, das Risiko erhöht, dass der Sprinklerwart, dieses Schließen auch tatsächlich durchführt.

Die EP 1 721 639 A1 lehrt insoweit ein Automatisierungssystem für Feuerlöscheinrichtungen und betrifft hierbei insbesondere eine Brandschutzeinrichtung mit Brandbekämpfungsaggregaten, die ein Brandschutzmittel verteilen, Alarmeinrichtungen, Brandschutzmittelfördereinrichtungen, Mitteln, mit denen die Funktionsfähigkeit der Alarmeinrichtungen über prüfbar ist und einer Computereinheit, die mit den Alarmeinrichtungen und/oder Brandschutzmittelfördereinrichtungen, Mitteln verbunden ist und die die Funktionsprüfung der Alarmeinrichtungen und/oder der Brandschutzmittelfördereinrichtungen, automatisch durchführt.

Vor diesem Hintergrund war es eine Aufgabe der vorliegenden Erfindung, den notwendigen Aufwand zur Kontrolle der Wasserlöschanlage zu verringern. Ferner war es eine Aufgabe, die Zuverlässigkeit und Effizienz der Wasserlöschung bei einer Wasserlöschanlage der eingangs genannten Art zu verbessern. Es ist außerdem eine Aufgabe der Erfindung, das Risiko einer Unterversorgung der Wasserlöschanlage mit Löschfluid zu verringern.

Diese Aufgabe wird erfindungsgemäß gelöst durch eine Wasserlöschanlage der eingangs genannten Art, wobei die Probierleitung ein Absperrorgan aufweist, das dazu eingerichtet ist, die Probierleitung bei einem Auslösen der Wasserlöschanlage zu schließen wobei die Wasserlöschanlage ferner eine Steuereinheit umfasst, die dazu eingerichtet ist, einen automatischen Testlauf der Pumpe zu steuern und bei einem Auslösen der Wasserlöschanlage den automatischen Testlauf abzubrechen und die Probierleitung mittels des Absperrorgans zu schließen.

Hierbei kann das Auslösen der Wasserlöschanlage insbesondere in Reaktion auf die Detektion eines Brandes geschehen. Der Begriff Detektion ist hierbei breit zu verstehen und kann einerseits das Ermitteln, mittels eines Sensors, insbesondere eines Sensors eines Brandmelders, einer Brandkenngröße umfassen. Alternativ oder zusätzlich kann darunter auch eine temperaturbedingte Öffnung einer oder mehrerer Düsen, insbesondere einer oder mehrerer Sprinkler, verstanden werden.

Bei Ermitteln einer Brandkenngröße mittels eines Sensors wird die Detektion des Brandes an eine Zentraleinheit, insbesondere eine Brandmelde- und/oder Löschsteuerzentrale (BMZ), weitergegeben, die sodann die Wasserlöschanlage mittels eines entsprechenden Auslösesignals auslöst. In diesem Fall kann die BMZ insbesondere ein entsprechendes Steuersignal übermitteln, das eine Aktivierung des Absperrorgans bewirkt. Hierbei kann die BMZ das Steuersignal unmittelbar an das Absperrorgan übermitteln und so das Absperrorgan direkt ansteuern oder es kann das Steuersignal an eine Steuereinheit senden, die in Antwort auf das Steuersignal ihrerseits das Absperrorgan ansteuert. In einigen Ausführungen kann das Steuersignal, das eine Aktivierung des Absperrorgans bewirkt, auch unabhängig von der BMZ und direkt von der Steuereinheit selbst erzeugt und übermittelt werden. Weitere Varianten, in denen das Absperrorgan von anderen Einheiten innerhalb des Systems aktiviert wird, sind ebenfalls denkbar.

Alternativ oder zusätzlich kann auch die Öffnung der Düsen, entweder durch Auslösen der Wasserlöschanlage durch die BMZ oder temperaturbedingt direkt an der Düse selbst, zur Aktivierung des Absperrorgans verwendet werden. Hierzu kann insbesondere ein Auslöseschalter innerhalb des Rohrnetzes verwendet werden. Unter einem Auslöseschalter wird hierbei jede Art von Schalter verstanden, der bei einem Auslösen der Wasserlöschanlage aktiviert wird, insbesondere schaltet. Das bedeutet, der Auslöseschalter ist insbesondere eingerichtet, in Reaktion auf beispielsweise einen Rauchalarm, einen Druckabfall innerhalb des Rohrnetzes, eine Änderung des Fluiddurchfluss innerhalb des Rohrnetzes und/oder durch weitere brandbedingte Einflüsse innerhalb, außerhalb und/oder in der Umgebung der Wasserlöschanlage, auszulösen, also zu schalten.

In einigen Ausführungsformen kann der Auslöseschalter insbesondere in Form eines Druckschalters oder eines Durchflussschalters ausgestaltet sein. Hierbei wird sich die Tatsache zu Nutzen gemacht, dass sich im Falle des Öffnens einer oder mehrerer Düsen der Druck und der Fluiddurchfluss innerhalb des Rohrnetzes schlagartig ändern. Dies kann zur Schaltung eines Druckschalters und/oder eines Durchflussschalters als Auslöseschalter führt. Diese Schaltung des Auslöseschalters kann dann verwendet werden, um das Absperrorgan zu aktivieren. Das Absperrorgan wird entsprechend automatisch aktiviert, sobald die Wasserlöschanlage auslöst. Hierbei ist ein Aktivieren dahingehend zu verstehen, dass das Absperrorgan in eine Position gebracht wird, die den Fluidfluss durch die Probierleitung sperrt.

Das bedeutet, dass die Aktivierung eine sofortige Unterbrechung des Volumenstroms durch die Probierleitung bewirkt, so dass die gesamte Fluidmenge im Rohrnetz zur Verfügung steht. Hierdurch wird sichergestellt, dass die Wasserlöschanlage ausreichend mit Wasser versorgt wird. Das bedeutet, dass zusätzlich zum Öffnungsorgan, welches dem Bereitstellen und Unterbrechen des Volumenstroms in die Probierleitung dient, ein zweites, redundantes Element, nämlich das Absperrorgan, bereitgestellt wird, um die Fluidzufuhr in die Probierleitung zu unterbrechen.

Damit ist es nicht mehr nötig, das im Falle eines Testlaufs geschultes Personal permanent vor Ort ist, um so den Testlauf im Brandfall manuell zu unterbrechen, wodurch eine Automatisierung des Testlaufs möglich wird. Bei einer Automatisierung des Testlaufs wird daher der oben benannte Vorgang automatisch, also nicht mehr händisch durch entsprechendes Personal, durchgeführt. Das bedeutet, der Testlauf kann entweder "auf Knopfdruck" eingeleitet werden. In so einem Fall kann ein Nutzer bestimmen, wann ein Testlauf eingeleitet werden soll. Alternativ oder zusätzlich kann der Testlauf auch insoweit automatisiert werden, dass er in vorbestimmten Zeitintervallen, beispielsweise jede Woche, automatisch startet. In so einem Falle wird insbesondere auch das Öffnungsorgan nicht mehr manuell bedient, sondern automatisch geöffnet und - nach Abschluss des Testlaufs - wieder geschlossen. Dies kann beispielsweise mittels eines entsprechenden Motorschiebers geschehen. Andere Verfahren zum Öffnen und Schließen des Öffnungsorgans sind allerdings auch vorstellbar. Alternativ oder zusätzlich kann natürlich auch vorgesehen werden, dass das Öffnungsorgan weiterhin manuell betätigt werden kann, um beispielsweise außerplanmäßige Probeläufe durchzuführen oder auch einfach die Einleitung des Testlaufs weiterhin dem geschulten Personal überlassen. In diesem Fall muss das Personal allerdings auch nicht die gesamte Zeit des Testlaufs anwesend sein, um den Testlauf zu überwachen, sondern kann sich nach dem Öffnen des Öffnungsorgans für die Zeit des Testlaufs anderen Aufgaben zuwenden. Hierdurch können der Aufwand und die Sicherheit bei der Durchführung des Testlaufs signifikant reduziert werden.

Gemäß einer bevorzugten Ausführungsform ist das Absperrorgan eingerichtet, sich bei dem Auslösen der Wasserlöschanlage von einer Entsperrposition in eine Sperrposition zu bewegen, in der das Absperrorgan die Probierleitung schließt, wobei die Sperrposition einer energetisch günstigen Grundposition des Absperrorgans entspricht.

Die Position, in der das Absperrorgan den Fluidfluss durch die Probierleitung sperrt, wird Sperrposition genannt. Entsprechend wird die Position, in der das Absperrorgan den Fluidfluss durch die Probierleitung zulässt Entsperrposition genannt. Das Absperrorgan ist bevorzugt eingerichtet, sich bei einem Aktivieren von der Entsperrposition in die Sperrposition zu bewegen. Bevorzugt entspricht die Sperrposition des Absperrorgans dem energetisch vorteilhaften Grundzustand des Absperrorgans, da hierdurch die Schaltung des Auslöseschalters in besonders vorteilhafter Weise zum automatischen Aktivieren des Absperrorgans verwendet werden kann.

Hierzu wird beim Start des Testlaufs der Pumpe ein entsprechendes Signal, beispielsweise durch die Steuereinheit, die auch den Testlauf steuert, an das Absperrorgan angelegt, welches das Absperrorgan in die Entsperrposition bewegt, in der der Fluidfluss durch die Probierleitung geöffnet ist. Die Ausgabe dieses Signals hält das Absperrorgan in der Entsperrposition. Im Falle einer Schaltung des Auslöseschalters wird dieses Signal durch die Schaltung unterbrochen. Das Absperrorgan erhält also nicht länger ein Signal, das es in der Entsperrposition hält und bewegt sich daher unmittelbar in die Sperrposition zurück, in der das Absperrorgan den Fluidfluss durch die Probierleitung sperrt. Hierdurch kann sichergestellt werden, dass die Absperrung energieunabhängig, also auch im Falle eines Stromausfalls, erreicht werden kann, da sich das Absperrorgan in so einem Fall ebenfalls unmittelbar in die Sperrposition bewegt.

In einer bevorzugten Ausführungsform der Erfindung weist das Verteilerrohr ein Verteilerrohrabsperrorgan auf, das dazu eingerichtet ist, einen Fluidfluss durch das Verteilerrohr bei einem Testlauf der Pumpe zu unterbrechen, wobei das Verteilerrohrabsperrorgan ferner eingerichtet ist, bei dem Auslösen der Wasserlöschanlage den Fluidfluss durch das Verteilerrohr freizugeben.

In einigen Ausführungen der Erfindung ist es nötig, zur Durchführung eines Pumpentestlaufs die Löschfluidversorgung der Wasserlöschanlage durch das Verteilerrohr zu unterbrechen, um beispielsweise zu verhindern, dass es durch Druckschläge zu einer Schaltung der Auslöseschalter innerhalb des Rohrnetzes kommt.

Hierzu kann die Wasserlöschanlage bevorzugt ein Verteilerrohrabsperrorgan umfassen. Das Verteilerrohrabsperrorgan ist hierbei innerhalb des Verteilerrohrs angeordnet. Im Grundzustand befindet sich das Verteilerrohrabsperrorgan in einer Durchflussposition und erlaubt so den Fluidfluss des Löschfluids durch das Verteilerrohr hin zu den Löschfluidauslässen, wie beispielsweise den Düsen. Das bedeutet, wenn keine gegengesetzte Ansteuerung/Auslösung erfolgt, befindet sich das Verteilerrohrabsperrorgan in der Position, in der die Löschfluidauslässe konstant über das Verteilerrohr mit Löschfluid versorgt werden können.

Wird nun der Pumpentestlauf gestartet, wird das Verteilerrohrabsperrorgan entsprechend von der Durchflussposition in die Absperrposition gebracht und ein Fluidfluss durch das Verteilerrohr wird durchbrochen. Endet der Pumpentestlauf wie planmäßig, wird das Verteilerrohrabsperrorgan nach Abschluss des Testlaufs freigegeben und bewegt sich in die Durchflussposition zurück. So kann sichergestellt werden, dass bei Wasserlöschanlagen, die sonst wegen der Testläufe der Pumpe trocken laufen würden, eine zuverlässige Versorgung mit Löschfluid bereitgestellt werden kann.

Endet der Testlauf der Pumpe unplanmäßig, erhält das Verteilerrohrabsperrorgan ein entsprechendes Signal, bevorzugt ein automatisiertes Signal, dass das Verteilerrohrabsperrorgan von der Absperrposition in die Durchflussposition bewegt. Auch in diesem Fall wird dadurch ein Fluidfluss in Richtung der Löschfluidauslässe mit ausreichend Löschfluid ermöglicht.

In einigen Ausführungsformen kann das Verteilerrohrabsperrorgan insbesondere durch einen Schieber verwirklicht werden, der im Absperrzustand in das Verteilerrohr geschoben wird und dieses so verschließt, dass kein Fluid den Schieber passieren kann.

Alternativ kann das Verteilerrohrabsperrorgan auch derart ausgestaltet werden, dass es den Fluidfluss während des Testlaufs der Pumpe nicht vollständig sperrt, sondern lediglich während des Testlaufs auftretende Druckschläge abfängt. In diesem Fall kann das Verteilerrohrabsperrorgan insbesondere in Form eines Druckablasses ausgestaltet werden. Beispielsweise kann das Verteilerrohrabsperrorgan ein Druckausgleichsventil oder ein Überdruckventil umfassen. Im Falle von Druckschlägen dienen diese Ventile sodann dazu, den Druck innerhalb des Verteilerrohrs auszugleichen und verhindern so, dass während des Pumpenlaufs Druckschläge die Auslöseschalter innerhalb des Rohrnetzes aktivieren.

Gemäß einer besonders bevorzugten Ausführungsform können das Absperrorgan und das Verteilerrohrabsperrorgan auch als ein einziges Absperrelement ausgestaltet werden. Eine solche Ausgestaltung kann insbesondere in Form eines 2/3 Wege-Ventils und/oder eines 2/3 Wege-Kugelhahns verwirklicht werden, das innerhalb der Abzweigung von Probierleitung und Verteilerrohr angeordnet ist und zwischen zwei Positionen geschaltet werden kann. Hierbei ist das Absperrelement also so ausgestaltet, dass es sich entweder in der Entsperr-/Absperrposition befindet, in der der Fluidfluss durch die Probierleitung freigegeben und der Fluidfluss in das Verteilerrohr unterbrochen ist, oder in der Sperr-/Durchflussposition, in der der Fluidfluss durch das Verteilerrohr freigegeben, aber der Fluidfluss durch die Probierleitung gesperrt ist.

Das Absperrelement ist hierbei insbesondere derart eingerichtet, dass es im energetisch günstigeren Grundzustand die Probierleitung sperrt und das Verteilerrohr freigibt, sich also in der Sperr-/Durchflussposition befindet. Auf diese Weise kann sichergestellt werden, dass selbst im Falle eines Stromausfalls die Versorgung des Rohrnetzes gewährleistet ist.

Gemäß einer weiteren Ausführung können das Öffnungsorgan und/oder das Absperrorgan und/oder das Verteilerrohrabsperrorgan automatisiert angesteuert werden. In einigen Ausführungsformen kann der Testlauf und die entsprechende Abschaltung desselben im Brandfall vollautomatisch oder teilweise automatisch geschehen, indem eines oder mehrere aus dem Öffnungsorgan, dem Absperrorgan und/oder dem Verteilerrohrabsperrorgan automatisiert angesteuert werden. Das Ansteuern kann hierbei entweder durch eine dedizierte Steuereinheit geschehen oder durch eine Steuereinheit, die den Testlauf steuert. Alternativ oder zusätzlich kann das Ansteuern auch durch die BMZ durchgeführt werden. Hierdurch ist es nicht nötig, geschultes Personal zur Durchführung des Testlaufs bereitzustellen.

In einigen Ausführungsformen können die Elemente auch nur teilweise automatisch angesteuert werden. So kann beispielsweise das Öffnungsorgan zunächst manuell durch einen Nutzer geöffnet werden. In einigen Ausführungsformen kann zusätzlich noch das Verteilerrohrabsperrorgan manuell geschlossen werden. Wenn die Wasserlöschanlage auslöst, können das Aktivieren des Absperrorgans - also das Schließen der Probierleitung - und das Ausschalten des Verteilerrohrabsperrorgans - also das Öffnen des Fluidflusses durch das Verteilerrohr automatisch durch eine entsprechende Ansteuerung geschehen und es ist keine manuelle Betätigung mehr nötig. In diesem Fall ist es nicht notwendig, dass das geschulte Personal nach Start des Testlaufs bei der Wasserlöschanlage verweilt.

In einer bevorzugten Ausführung weist die Wasserlöschanlage ferner einen ersten Auslöseschalter auf, wobei der erste Auslöseschalter dazu eingerichtet ist, bei einem Auslösen der Wasserlöschanlage die Probierleitung mittels des Absperrorgans zu schließen.

Es ist bevorzugt, dass das Absperrorgan mittels eines Auslöseschalters aktiviert wird. Wie bereits erwähnt, führt ein Auslösen der Wasserlöschanlage zu einem Absinken des Drucks innerhalb des Rohres. Dieser Druckabfall schaltet sodann den Auslöseschalter, der dann das Absperrorgan aktiviert.

Hierzu sollte der Auslöseschalter mit der Signalleitung, die die Steuereinheit und das Absperrorgan kommunikativ verbindet, verbunden sein. Beim Start des Pumpentestlaufs gibt die Steuereinheit (unter anderem) ein Signal aus, dass das Absperrorgan von der energetisch günstigeren Sperrposition in die Entsperrposition bewegt. Solange dieses Signal am Absperrorgan angelegt ist, wird das Absperrorgan in der Entsperrposition gehalten. Wenn nun der Auslöseschalter schaltet, bewirkt diese Schaltung eine Unterbrechung des Signals zwischen Steuereinheit und Absperrorgan und das Absperrorgan bewegt sich unmittelbar in die Sperrposition zurück.

Dasselbe Prinzip kann auch bei dem Verteilerrohrabsperrorgan verwendet werden. Hierzu muss das Verteilerrohrabsperrorgan so eingerichtet sein, dass es im energetisch günstigeren Grundzustand in einer Durchflussposition angeordnet ist, in der der Fluidfluss durch das Verteilerrohr freigegeben ist. Durch Übermitteln eines Signals durch die Steuereinheit wird das Verteilerrohrabsperrorgan dann in eine Absperrposition bewegt, in der der Fluidfluss durch das Verteilerrohr gesperrt ist. Das Signal hält das Verteilerrohrabsperrorgan in der Absperrposition. Beim Auslösen der Wasserlöschanlage und entsprechender Schaltung des Auslöseschalters wird das Signal durch die Schaltung unterbrochen, wodurch sich das Verteilerrohrabsperrorgan in die Durchflussposition bewegt.

In einer weiteren bevorzugten Ausführung, weist die Wasserlöschanlage ein Alarmventil auf, wobei das Alarmventil den ersten Auslöseschalter aufweist.

Gemäß einer weiteren Ausführungsform der Erfindung ist der Auslöseschalter, der eingerichtet ist, um bei Auslösen der Wasserlöschanlage das Absperrorgan zu schließen, an einem Alarmventil angeordnet.

Als Alarmventil im Sinne der Erfindung werden sowohl passive als auch aktive Alarmventile verstanden. Bekannteste Beispiele für diese Alarmventile sind Nass- und Trockenalarmventile sowie Sprühwasserventile.

Unter einem passiven Alarmventil wird hierbei ein Ventil verstanden, das bei einer Änderung des Drucks im Rohrnetz selbstständig öffnet. Unter einem aktiven Alarmventil wird ein Ventil verstanden, das nach einem Eingang eines korrespondierenden Signals von externen Branderkennungsmitteln, wie beispielsweise den eingangs erwähnten Brandmeldern, oder als Funktion von externen Steuereingriffen aktiv mittels Öffnen des Sperrelements den Fluidstrom freigibt und einen Alarm auslöst.

Ein Alarmventil wird auch als Alarmventilstation bezeichnet. Alarmventilstationen sind in Wasserlöschanlagen zwischen den Düsen, insbesondere den Sprinklern, zum Auslass des Löschwassers und der Wasserversorgung angeordnet.

In einer weiteren Ausführungsform ist der Auslöseschalter an dem Verteilerrohr nach der Abzweigung der Probierleitung angeordnet.

In einigen Ausführungen ist der Auslöseschalter, der eingerichtet ist, bei einem Auslösen der Wasserlöschanlage die Probierleitung mittels des Absperrorgans zu verschließen, an dem Verteilerrohr angeordnet. Hierbei ist der Auslöseschalter bevorzugt in Fluidrichtung hinter der Abzweigung der Probierleitung von dem Verteilerrohr angeordnet. Bevorzugt befindet sich der Auslöseschalter in untermittelbarer Nähe der Abzweigung, ist also nur um einen kleinen Abstand von ihr beabstandet.

Bei einem Auslösen der Wasserlöschanlage verändern sich beispielsweise Druck, Durchfluss und ähnliches innerhalb des Rohrnetzes und somit auch innerhalb des Verteilerrohrs. Das ermöglicht, den Auslöseschalter auch an dieser Stelle der Wasserlöschanlage - und nicht am Alarmventil - anzuordnen. Hierdurch kann der Auslöseschalter näher an das Absperrorgan innerhalb der Probierleitung gebracht werden. Der Auslöseschalter kann hierbei insbesondere hinter einer Rückschlagklappe, die zwischen Probierleitung und Verteilerrohr angebracht werden kann, angeordnet sein.

In einer bevorzugten Ausführungsform weist die Wasserlöschanlage weiter eine Brandmelder- und/oder Löschsteuerzentrale auf, wobei die Brandmelder- und/oder Löschsteuerzentrale dazu eingerichtet ist, bei einem Auslösen der Wasserlöschanlage die Probierleitung mittels des Absperrorgans zu schließen.

In einer weiteren Ausführungsform der Erfindung kann auch die Brandmelder- und/oder Löschsteuerzentrale (BMZ) verwendet werden, um das Absperrorgan zu aktivieren und somit die Zufuhr zu der Probierleitung zu unterbrechen. Hierfür ist insbesondere vorgesehen, dass das Absperrorgan in kommunikativer Verbindung mit der BMZ steht. Insbesondere kann zwischen Absperrorgan und BMZ eine Signalverbindung, insbesondere in Form einer Signalleitung, bestehen, wobei die BMZ ein Aktivierungssignal an das Absperrorgan übermittelt, das das Absperrorgan veranlasst, die Zufuhr zur Probierleitung unmittelbar zu schließen, um so das Löschwasser vollständig der Wasserlöschanlage zur Verfügung zu stellen. Dies bewirkt eine besonders schnelle Unterbrechung des Testlaufs und ermöglicht so eine möglichst effiziente Löschfluidzufuhr bei Auslösen der Wasserlöschanlage.

In einer weiteren Ausführung der Erfindung sind das Absperrorgan und/oder das Verteilerrohrabsperrorgan mit wenigstens einer der folgenden Verschlusseinrichtungen ausgebildet:
- einem Sprühflutventil,
- einem vorgesteuerten Magnetventil,
- einem direkt gesteuerten Magnetventil und
- einem ausfallsicheren Motorschieber.

Das Absperrorgan und/oder das Ventilrohrabsperrorgan können auf unterschiedliche Weisen ausgestaltet werden. In einigen Ausführungen können Absperrorgan und/oder Ventilrohrabsperrorgan insbesondere mit einem Sprühflutventil ausgebildet sein. Derartige Ventile sind dazu bestimmt, große Wassermengen in kurzer Zeit durchzulassen. Sie werden daher mit einem vorbestimmten Betriebsdruck (zwischen 10 und 16 bar, abhängig von der Nennweite) und entsprechenden vorbestimmten Nennweiten (insbesondere DN50, DN80, DN100, DN150, DN 200) ausgebildet. Nach dem Öffnen können solche Sprühflutventile wieder zurückgesetzt werden. Der Vorteil solcher Sprühflutventile ist, dass sie bereits für die Anwendung im Brandschutz zertifiziert sind.

In einigen Ausführungsformen können Absperrorgan und/oder Ventilrohrabsperrorgan auch mit einem Magnetventil ausgestaltet werden. Ein Magnetventil ist ein Ventil, welches durch einen Elektromagneten betätigt wird und ebenfalls eine sehr schnelle Schaltung und eine Rücksetzung ermöglicht. Magnetventile umfassen ein Dichtelement, wie eine Membran oder einen Kolben, welches von einer Entsperrposition (oder Durchflussposition) in eine Sperrposition (oder Absperrposition) und wieder zurück in die Entsperrposition gebracht werden kann.

Magnetventile können erfindungsgemäß insbesondere als vorgesteuerte Magnetventile ausgestaltet werden. Ein vorgesteuertes Magnetventil benötigt zum Öffnen - und zum Schließen - eine Druckdifferenz des Betriebsdruckes. Hierbei wird das Dichtelement durch die vorhandene Druckdifferenz von der Entsperrposition in die Sperrposition bewegt und anders herum. Der Antrieb mittels Elektromagnet erfüllt bei dieser Art von Magnetventil nur eine Vorsteuerfunktion, durch die das Dichtelement lediglich entlastet wird. Dies erlaubt, auch mit kleinen Magneten hohe Drücke bei großen Nennweiten zu steuern.

Magnetventile können ebenfalls als direktgesteuerte Magnetventile ausgestaltet werden. Derartige Magnetventile nutzen einen Antrieb mit Elektromagnet. Das bedeutet, dass der Antrieb direkt mit dem Dichtelement, üblicherweise einem Kolben, verbunden ist. Solange der Elektromagnet aktiviert ist, wird der Kolben in der Entsperrposition gehalten. Bei Deaktivierung des Antriebs wird der Kolben mittels einer Druckfeder in der Sperrposition gehalten. Üblicherweise wird ferner die Strömungsrichtung des Fluids, im vorliegenden Fall des Löschwassers, durch das Ventil derart festgelegt, dass bei geschlossenem Ventil der sich zwischen Zulauf und Auslauf des Ventils aufbauende Differenzdruck den Kolben zusätzlich gegen den Ventilsitz drückt.

Darüber hinaus können auch andere Ventile für das Absperrorgan und/oder das Verteilerrohrabsperrorgan verwendet werden, beispielsweise Quetschventile, Fail-Safe-Ventile und ähnliches.

In einer weiteren Ausführungsform können das Absperrorgan und/oder das Ventilabsperrorgan mit einem ausfallsicheren Motorschieber ausgestaltet werden, der die Probierleitung mittels eines Sperrelements schließen kann. Das bedeutet, der Motorschieber aktiviert bei Auslösen der Wasserlöschanlage und schiebt sodann das Sperrelement in die Sperrposition, wodurch die Versorgung der Probierleitung unterbrochen wird.

Hierbei ist insbesondere bevorzugt, dass der Motorschieber ausfallsicher ausgestaltet ist. Hierzu kann der Motorschieber an das Stromnetz angeschlossen werden und gleichzeitig eine Batterie oder einen anderen Energiespeicher aufweisen, der im Falle eines Stromausfalls weiterhin einen Betrieb des Motorschiebers sicherstellt. Hierdurch kann verhindert werden, dass das Absperrorgan im Fall eines Stromausfalls nicht mehr vernünftig funktioniert.

In einigen Ausführungen weist die Auslösung des Absperrorgans und/oder des Verteilerrohrabsperrorgans insbesondere eine hydraulische, pneumatische, elektrische und/oder pneumatisch-elektrischer Auslösung auf.

Es ist bevorzugt, dass das Absperrorgan im energetisch günstigsten Grundzustand die Probierleitung versperrt. Dadurch kann sichergestellt werden, dass das Absperrorgan auch bei einem Stromausfall noch zuverlässig die Probierleitung schließt. Um das Absperrorgan dazu zu veranlassen, den Fluidfluss durch die Probierleitung freizugeben, kann das Absperrorgan mittels einer elektrischen, pneumatischen und/oder pneumatisch-elektrischen Ansteuerung aus seinem energetisch günstigen Zustand herausbewegt werden.

Umgekehrt ist es bevorzugt, dass das Verteilerrohrabsperrorgan im energetisch günstigsten Grundzustand den Fluidfluss durch das Verteilerrohr freigibt. Hierdurch kann sichergestellt werden, dass auch bei Ausfall des Stroms der Fluidfluss des Löschfluids zu den Fluidauslässen der Wasserlöschanlage gewährleistet ist. Mittels elektrischer, pneumatischer oder elektrisch-pneumatischer Ansteuerung kann das Verteilerrohrabsperrorgan dann aus dem energetisch günstigen Zustand bewegt werden, um so den Fluidfluss durch das Verteilerrohr zu unterbinden.

Gemäß einer weiteren Ausführungsform, umfasst die Wasserlöschanlage weiterhin eine Steuereinheit, die dazu eingerichtet ist, einen automatischen Testlauf der Pumpe zu steuern.

Es ist bevorzugt, dass der Testlauf der Pumpe automatisiert durchgeführt werden kann. Hierzu kann die Wasserlöschanlage erfindungsgemäß eine Steuereinheit umfassen, die den Pumpentestlauf automatisch startet und beendet und die während des Testlaufs der Pumpe die Steuerung desselben übernimmt, also mithin prüft, wann die Betriebskennwerte erreicht sind und/oder wann der Testlauf zu beenden ist und/oder wann der Testlauf der Pumpe abzubrechen ist. In diesem Zusammenhang bedeutet ein Beenden des Testlaufs durch die Steuereinheit, dass der Testlauf der Pumpe erfolgreich durchgeführt und sodann durch Schließen des Öffnungsorgans und Abschalten der Pumpe beendet wurde. Ein Abbrechen des Testlaufs der Pumpe bedeutet, dass es während des Testlaufs zu einem Brandereignis gekommen ist und die Probierleitung während des Testlaufs geschlossen wird, um das Löschfluid der Wasserlöschanlage zur Verfügung zu stellen.

Die Steuereinheit ist insbesondere eingerichtet, den Testlauf der Pumpe automatisch zu starten, indem sie zunächst ein Signal an das Öffnungsorgan ausgibt, welches das Öffnungsorgan veranlasst, den Fluidfluss durch die Probierleitung freizugeben. Sodann gibt die Steuereinheit ein Signal an die Pumpenstarteinrichtung der Pumpe aus, welches dafür sorgt, dass der Druck an der Pumpenstarteinrichtung verringert wird. Durch dieses Absenken des Drucks an der Pumpenstarteinrichtung wird die Pumpe gestartet. Anschließend wird der Startdruck, welcher dem Druck zum Zeitpunkt des Anlaufens der Pumpe entspricht, gemessen und aufgezeichnet und der Testlauf durchgeführt werden, bis die normalen Betriebskennwerte des Antriebsmotors der Pumpe erreicht sind. Die Messwerte können hierbei an die Steuereinheit übermittelt und von dieser ausgewertet und abgespeichert werden. Danach gibt die Steuereinheit ein Signal an das Öffnungsorgan aus, um die Probierleitung wieder zu schließen. Sodann wird die Pumpe mittels eines entsprechenden Signals von der Steuereinheit abgeschaltet. Die Steuereinheit ist also eingerichtet, den Testlauf der Pumpe automatisiert durchzuführen. Hierzu ist die Steuereinheit bevorzugt eingestellt, den Testlauf der Pumpe in regelmäßigen Zeitintervallen, insbesondere jede Woche, automatisch durchzuführen. Hierbei wird zum einen die Pumpe selbst getestet und zum anderen die Starteinrichtung, welche dazu dient die Pumpe während des Testlaufs zu starten. Diese Starteinrichtung umfasst üblicherweise einen oder mehrere, insbesondere zwei, Druckschalter im Verteilerrohr. Hierbei wird insbesondere getestet, ab welchem Druck die Pumpe startet.

Die Steuereinheit kann ferner dazu eingerichtet sein, den Testlauf der Pumpe aufgrund äußerer Umstände, wie Fehlermeldungen, vergangenen Brandereignissen oder ähnlichem, zu einem anderen Zeitpunkt als dem üblichen Intervall durchzuführen. Die Steuereinheit ist hierbei mithin eingerichtet, zu bestimmen, zu welchem Zeitpunkt ein Testlauf der Pumpe angebracht ist und zu welchem von einem Testlauf der Pumpe abgesehen werden kann. Dies ermöglicht eine deutlich vereinfachte Prüfung der Pumpe.

In einer weiteren Ausführungsform der Erfindung ist die Steuereinheit dazu eingerichtet, bei einem Auslösen der Wasserlöschanlage den automatischen Testlauf der Pumpe abzubrechen und die Probierleitung mittels des Absperrorgans zu schließen.

Die Steuereinheit ist bevorzugt eingerichtet, um aktiv und automatisch für eine Unterbrechung des Testlaufs der Pumpe zu sorgen, wenn es zu einem Auslösen der Wasserlöschanlage, üblicherweise aufgrund eines Brandereignisses, kommt. In dieser Ausführungsform kann die Steuereinheit auch unmittelbar selbst dazu dienen, das Absperrorgan zu aktivieren und so die Zufuhr des Löschwassers zur Probierleitung zu unterbrechen.

In einer Ausführungsform ist die Steuereinheit dazu eingerichtet, bei einem Auslösen der Wasserlöschanlage den Fluidfluss durch das Verteilerrohr mittels des Verteilerrohrabsperrorgans freizugeben.

Wie bereits erwähnt, kann es in manchen Wasserlöschanlagen nötig sein, den Fluidfluss durch das Verteilerrohr mittels eines Verteilerrohrabsperrorgans zu unterbrechen. In diesem Fall ist es notwendig, im Brandfall eben diese Fluidverbindung durch das Verteilerrohr möglichst schnell wieder freizugeben. Hierzu kann vorliegend insbesondere die Steuereinheit verwendet werden, die hierbei dazu eingerichtet ist, nicht nur das Absperrorgan in der Probierleitung zum Absperren derselben, sondern auch das Verteilerrohrabsperrorgan im Verteilerrohr zum Freigeben desselben zu veranlassen.

In einem weiteren Aspekt betrifft die Erfindung eine Steuereinheit zur Steuerung eines automatischen Testlaufs der Pumpe einer Wasserlöschanlage, insbesondere einer Wasserlöschanlage wie voranstehend beschrieben, wobei die Steuereinheit dazu eingerichtet ist:
- einen automatischen Testlauf der Pumpe zu starten,
- ein Auslösesignal, das für ein Auslösen der Wasserlöschanlage indikativ ist, zu erhalten und
- den Testlauf der Pumpe durch Ansteuern eines Absperrorgans der Probierleitung abzubrechen, wenn das Auslösesignal erhalten wird.

Die vorliegende Erfindung betrifft ferner die voranstehend bereits erwähnte Steuereinheit, die der - automatisierten - Steuerung des Testlaufs der Pumpe für eine Wasserlöschanlage dient. Hierzu ist die Steuereinheit insbesondere eingerichtet, in vorbestimmten Intervallen und/oder auf Eingabe eines Nutzers den Testlauf der Pumpe einzuleiten. Die Einleitung des Testlaufs der Pumpe erfolgt hierbei durch ein Ansteuern, durch die Steuereinheit, des Öffnungsorgans, welches in der Probierleitung angeordnet ist. Hierdurch wird das Öffnungsorgan in die Öffnungsposition gebracht. In der Öffnungsposition kann das Löschfluid aus der Fluidversorgung in die Probierleitung gelangen und der Testlauf der Pumpe kann durchgeführt werden. Hierzu wird zur Einleitung des Testlaufs der Pumpe zunächst der Druck an der Starteinrichtung der Pumpe abgesenkt. Dieses Absenken kann insbesondere durch die Steuereinheit geschehen. Durch den Druckabfall startet die Pumpe sodann. Anschließend können die Betriebskennwerte der Pumpe in bekannter Weise protokolliert werden. Nach erfolgreichem Abschluss des Testlaufs wird dann das Öffnungsorgan wieder geschlossen und die Pumpe, insbesondere mittels eines entsprechenden Steuerbefehls, abgeschaltet.

Die Steuereinheit kann weiter dazu eingerichtet sein, ein Auslösen der Wasserlöschanlage zu registrieren. Hierzu kann die Steuereinheit insbesondere ein Auslösesignal erhalten, das angibt, dass die Wasserlöschanlage ausgelöst wurde. Dieses Signal kann durch die BMZ übermittelt werden. In Antwort auf das Empfangen des Auslösesignals kann die Steuereinheit sodann das Absperrorgan ansteuern, so dass das Absperrorgan in die Sperrposition gebracht und der Testlauf der Pumpe somit beendet wird.

Alternativ oder zusätzlich kann ein Abbrechen des Testlaufs auch mittels des Auslöseschalters erfolgen, wobei der Auslöseschalter hinter der Abzweigung oder am Alarmventil angeordnet sein kann. Hierzu ist die Steuereinheit bevorzugt eingerichtet, über eine Signalleitung ein Signal auszugeben, dass das Absperrorgan in der Entsperrposition hält. Bei Auslösen der Wasserlöschanlage verändern sich Druck, Durchfluss und ähnliches innerhalb des Rohrnetzes. Der Auslöseschalter ist hierbei eingerichtet, in Antwort auf diese Veränderung zu schalten. Diese Schaltung bewirkt eine Unterbrechung des Signals zwischen Steuereinheit und Absperrorgan, wodurch das Absperrorgan in die Sperrposition bewegt wird.

In einer bevorzugten Ausführungsform ist die Steuereinheit ferner dazu eingerichtet:
- ein Verteilerrohrabsperrorgan in einem Verteilerrohr der Wasserlöschanlage anzusteuern, wobei das Verteilerrohrabsperrorgan eingerichtet ist, in Antwort auf das Ansteuern einen Fluidfluss durch das Verteilerrohr zu unterbrechen, und
- das Verteilerrohrabsperrorgan der Pumpe erneut anzusteuern, wobei das Verteilerrohrabsperrorgan eingerichtet ist, in Antwort auf das erneute Ansteuern den Fluidfluss durch ein Verteilerrohr der Wasserlöschanlage wieder freizugeben.

In einigen Ausführungen ist die Steuereinheit eingerichtet, auch das Verteilerrohrabsperrorgan anzusteuern und es so von der Durchflussposition in die Absperrposition und zurück zu bewegen. Hierzu steht die Steuereinheit bevorzugt in Signalverbindung mit dem Verteilerrohrabsperrorgan und gibt ein entsprechendes Signal an das Verteilerrohrabsperrorgan aus, wenn der Testlauf der Pumpe aktiviert werden soll. In Antwort auf dieses Signal bewegt sich das Verteilerrohrabsperrorgan in die Absperrposition, so dass kein Fluidfluss durch das Verteilerrohr mehr möglich ist.

Ferner ist die Steuereinheit eingerichtet, ein erneutes Signal über die Signalverbindung zu übermitteln, dass das Verteilerrohrabsperrorgan veranlasst, sich aus der Absperrposition in die Durchflussposition zu bewegen, um so den Fluidfluss durch das Verteilerrohr wieder freizugeben. Dieses erneute Signal kann zum einen von der Steuereinheit übermittelt werden, wenn der Testlauf erfolgreich abgeschlossen wurde. Zum anderen kann die Steuereinheit aber auch eingerichtet sein, das Verteilerrohrsperrorgan in Antwort auf das Auslösesignal - also bei Abbruch des Testlaufs - anzusteuern, um im Falle einer Auslösung der Wasserlöschanlage den Fluidfluss entsprechend freizugeben.

Alternativ oder zusätzlich kann ein Deaktivieren des Verteilerrohrabsperrorgans auch mittels des Auslöseschalters erfolgen. Hierzu ist die Steuereinheit bevorzugt eingerichtet, über eine Signalverbindung ein Signal auszugeben, das das Verteilerrohrabsperrorgan in der Absperrposition hält. Beim Schalten des Auslöseschalters wird dieses Signal unterbrochen und das Verteilerrohrabsperrorgan bewegt sich in die Durchflussposition, in der der Fluidfluss durch das Verteilerrohr möglich ist.

In einer Ausführungsform ist die Steuereinheit ferner dazu eingerichtet, Messwerte wenigstens eines in oder an der Probierleitung angeordneten Sensors zu speichern und auszuwerten. Während des Pumpentestlaufs können verschiedene Parameter der Pumpe und des Fluidflusses innerhalb der Probierleitung bestimmt werden, um die Funktionalität der Pumpe zu prüfen. Hierzu ist einer oder mehrere Sensoren bevorzug innerhalb oder an der Innenwand oder Außenwand der Probierleitung und/oder der Pumpe angeordnet.

Bei einem solchen Sensor kann es sich insbesondere um einen Vibrationssensor zur Messung des Zustands der Pumpe, einen Drucksensor zu Bestimmung des Drucks innerhalb der Probierleitung und/oder um einen Volumenstrommesssensor zur Bestimmung des Volumenstroms durch die Probierleitung handeln.

Die mittels dieser Sensoren und Vorrichtungen ermittelten Messwerte können über entsprechende Signalverbindungen an die Steuereinheit übermittelt werden. Die Steuereinheit umfasst hierzu bevorzugt zumindest einen Speicher und eine Auswerteeinheit. Die Messwerte können innerhalb des Speichers temporär und/oder dauerhaft gespeichert werden. Ferner werden die Messwerte an die Auswerteeinheit übermittelt. Die Auswerteeinheit wertet die einzelnen Messwerte aus und gibt das Ergebnis dieser Auswertung aus. Hierbei kann das Ergebnis in Form einer grafischen Ausgabe erfolgen, die einem Nutzer erlaubt, selbst den Zustand der getesteten Pumpe zu prüfen. Alternativ oder zusätzlich kann die Ausgabe auch dahingehend ausgestaltet sein, dass das Ergebnis der Auswertung ein einfaches "Pumpenzustand in Ordnung"/ "Pumpenzustand nicht in Ordnung" umfasst und entsprechende Details erst nach expliziter Auswahl durch den Nutzer angezeigt werden.

In einem weiteren Aspekt wird eine Brandmelder- und/oder Löschsteuerzentrale (BMZ) bereitgestellt, die eingerichtet ist, das Absperrorgan zu aktivieren, sobald die Wasserlöschanlage auslöst. Hierzu kann die BMZ entweder direkt mit dem Absperrorgan kommunizieren oder diese Kommunikation kann über die Steuereinheit geschehen. Die kommunikative Verbindung zwischen Absperrorgan und BMZ kann hierbei als Signalleitung ausgestaltet sein, der gegebenenfalls die Steuereinheit zwischengeschaltet ist. Die BMZ ist hierbei insbesondere eingerichtet, zusätzlich zum Auslösesignal zum Auslösen der Wasserlöschanlage ein Aktivierungssignal zu erzeugen und dieses Aktivierungssignal an das Absperrorgan zu übermitteln. In Antwort auf dieses Aktivierungssignal wird das Absperrorgan aktiviert, sperrt also unmittelbar die Zufuhr zur Probierleitung.

Hierbei kann die Brandmelder- und/oder Löschsteuerzentrale ferner eingerichtet sein, ein in einem Verteilerrohr der Wasserlöschanlage angeordnetes Verteilerrohrabsperrorgan zum Freigeben eines Fluidflusses durch das Verteilerrohr anzusteuern.

In dieser Ausführung kann das Verteilerrohrabsperrorgan auch durch die BMZ, gegebenenfalls über eine entsprechende Steuereinheit, von der Durchflussposition in die Absperrposition und zurück bewegt werden.

Die Erfindung betrifft ferner ein Verfahren zum Steuern einer Wasserlöschanlage, insbesondere einer Wasserlöschanlage wie voranstehend beschrieben, umfassend das Durchführen eines Testlaufs einer Pumpe der Wasserlöschanlage, wobei das Verfahren die folgenden Schritte umfasst:
- Starten des Testlaufs der Pumpe,
- Erhalten eines Auslösesignals, das für ein Auslösen der Wasserlöschanlage indikativ ist, und
- Abbrechen des Testlaufs der Pumpe durch Ansteuern eines Absperrorgans in der Probierleitung, wenn das Auslösesignal erhalten wird.

Gemäß einer Ausführungsform umfasst das Verfahren weiterhin ein Ansteuern eines Verteilerrohrabsperrorgans in einem Verteilerrohr der Wasserlöschanlage, um einen Fluidfluss durch das Verteilerrohr zu unterbrechen, und ein erneutes Ansteuern des Verteilerrohrabsperrorgans, um den Fluidfluss durch ein Verteilerrohr wieder freizugeben. Gemäß einer weiteren Ausführungsform umfasst das Starten des Testlaufs ein Ansteuern eines Öffnungsorgans einer Probierleitung, um den Testlauf der Pumpe automatisch zu beginnen. Gemäß einer weiteren Ausführungsform umfasst das Verfahren weiterhin ein Abspeichern und Auswerten von Messwerten wenigstens eines in oder an der Probierleitung angeordneten Sensors.

In einigen Ausführungen wird dieses Verfahren insbesondere durch die Steuereinheit wie vorstehend beschrieben ausgeführt. Hierbei umfasst das Steuern der Wasserlöschanlage insbesondere das Starten und Durchführen des Testlaufs für die Pumpe.

Das Starten des Testlaufs der Pumpe kann hierbei insbesondere automatisch durch ein Ansteuern des Öffnungsorgans, welches in der Probierleitung angeordnet ist, erfolgen, bevorzugt durch die Steuereinheit. Hierdurch wird das Öffnungsorgan in die Öffnungsposition gebracht. Anschließend wird der Druck an der Starteinrichtung der Pumpe abgesenkt. Dieses Absenken kann ebenfalls insbesondere durch die Steuereinheit geschehen. Durch den Druckabfall startet die Pumpe sodann. Anschließend können die Betriebskennwerte der Pumpe protokolliert werden. Nach erfolgreichem Abschluss des Testlaufs wird dann das Öffnungsorgan wieder geschlossen und die Pumpe durch einen entsprechenden Steuerbefehl abgeschaltet.

Der Testlauf der Pumpe wird bevorzugt in vorbestimmten Intervallen und/oder in Reaktion auf eine Nutzereingabe eingeleitet

Der Testlauf der Pumpe kann sodann durchgeführt werden, bis die Nennwerte für den Betrieb erreicht sind. Wird allerdings während des Testlaufs der Pumpe ein Auslösesignal erhalten, das angibt, dass die Wasserlöschanlage auslöst, wird der Testlauf der Pumpe abgebrochen. Dieses Auslösesignal kann insbesondere durch eine BMZ erzeugt oder durch den Auslöseschalter indiziert worden sein, wie voranstehend beschrieben. Der Abbruch des Testlaufs der Pumpe wird hierbei durch eine Aktivierung des Absperrorgans durchgeführt, so dass das Absperrorgan in die Sperrposition gebracht wird und damit verhindert, dass weiterhin Löschwasser in die Probierleitung gelangen kann. Das Löschwasser steht dann vollständig der Wasserlöschanlage zur Verfügung. Zusätzlich kann der Abbruch des Testlaufs auch ein Deaktivieren des Verteilerrohrabsperrorgans im Verteilerrohr umfassen.

Die Erfindung wird nachfolgend unter Bezugnahme auf die beigefügten Figuren anhand bevorzugter Ausführungsbeispiele näher beschrieben. Hierbei zeigen:
- Fig. 1: einen schematischen Aufbau einer Wasserlöschanlage gemäß einer bevorzugten Ausführungsform.
- Fig. 2: eine schematische Darstellung eines Ausschnitts einer Wasserlöschanlage gemäß einer bevorzugten Ausführungsform.
- Fig. 3: eine Modifikation der Wasserlöschanlage gemäß der Fig. 2.
- Fig. 4: eine schematische Darstellung eines Ausschnitts einer Wasserlöschanlage gemäß einer weiteren bevorzugten Ausführungsform.
- Fig. 5: eine schematische Darstellung eines Ausschnitts einer Wasserlöschanlage gemäß einer noch weiteren bevorzugten Ausführungsform.
- Fig. 6: eine Ablaufdiagram für ein Verfahren zur erfindungsgemäßen Steuerung einer Wasserlöschanlage.

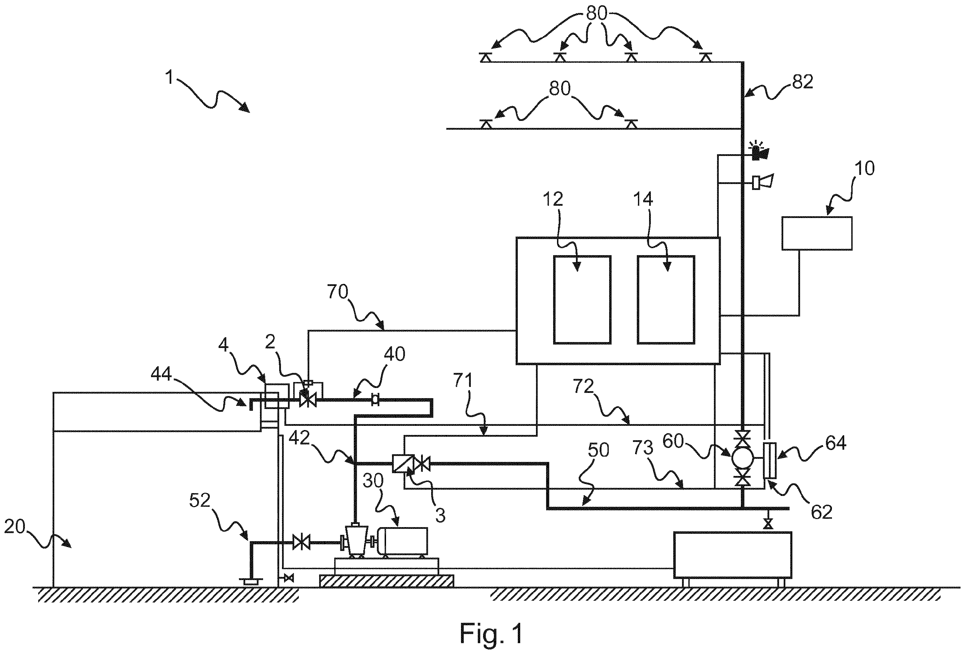

Die Fig. 1 zeigt eine Wasserlöschanlage 1 gemäß einer bevorzugten Ausführungsform der Erfindung. In dieser Ausführungsform ist die Wasserlöschanlage 1 eine Sprinkleranlage umfassend eine Vielzahl von Sprinklern 80, die über ein Rohrnetz 82 mit einem Löschfluid versorgt werden.

Das Löschfluid wird durch eine Fluidversorgung bereitgestellt, die in der beispielhaften Ausführung der Fig. 1 als Vorratsbehälter 20 ausgeführt ist. Eine Saugleitung 52 dient dazu, mittels Pumpe 30, die vorliegend als Sprinklerpumpe ausgestaltet ist, das im Vorratsbehälter 20 befindliche Löschfluid aus diesem Vorratsbehälter 20 zu fördern.

Von der Pumpe 30 geht ein Verteilerrohr 50 ab, welches eine Probierleitungs-Abzweigung 42 umfasst, an welcher die Probierleitung 40 vom Verteilerrohr 50 abgezweigt wird. Die Probierleitung 40 umfasst an ihrem der Probierleitungs-Abzweigung 42 abgewandten Ende einen Rückfluss 44, durch den das Löschfluid beim Testlauf der Pumpe in den Vorratsbehälter 20 zurückgeführt werden kann.

Zwischen Abzweigung 42 und Rückfluss 44 sind entlang der Probierleitung 40 außerdem ein Öffnungsorgan 2 und ein Absperrorgan 4 angeordnet. Das Absperrorgan 4 ist im energetisch günstigen Grundzustand aktiviert, befindet sich also in einer Position, in der es den Fluidfluss durch die Probierleitung 40 sperrt. Das Öffnungsorgan 2 ist in seinem energetisch günstigen Grundzustand, in dem kein Testlauf der Pumpe durchgeführt wird, geschlossen und sperrt somit den Fluss durch die Probierleitung 40.

Das Verteilerrohr 50 führt zu Alarmventil 60, welches in der vorliegenden Ausführungsform als Nassalarmventil ausgestaltet ist. Alarmventil 60 umfasst ferner einen ersten Druckschalter 62 und einen zweiten Druckschalter 64, die mit einer Zentraleinheit, die unter anderem eine Steuereinheit 12 und eine Sprinklerüberwachungszentrale 14 umfasst, in Signalverbindung stehen. Die Zentraleinheit steht ihrerseits in Signalverbindung mit der Brandmelder- und/oder Löschsteuerzentrale (BMZ) 10.

Alarmventil 60 sperrt im Normalzustand, also in dem Zustand, in dem die Wasserlöschanlage 1 nicht ausgelöst ist, die Verbindung zwischen Verteilerrohr 50 und Rohrnetz 82 umfassend die Vielzahl von Sprinklern 80. In der beispielhaften Ausführung der Fig. 1 umfasst das Verteilerrohr 50 ferner ein Verteilerrohrabsperrorgan 3. Das Verteilerrohrabsperrorgan 3 kann zwischen einer Durchflussposition und einer Absperrposition hin und her bewegt werden. In der Durchflussposition ist das Verteilerrohrabsperrorgan 3 hierbei so angeordnet, dass es einen Fluidfluss durch das Verteilerrohr 50 hin zum Alarmventil 60 zulässt. In der Absperrposition ist das Verteilerrohrabsperrorgan 3 so angeordnet, dass es den Fluid-fluss durch das Verteilerrohr 50 zum Alarmventil unterbricht. Das Verteilerrohrabsperrorgan 3 ist hierbei so eingerichtet, dass es sich im energetisch günstigen Grundzustand in der Durchflussposition befindet, so dass ein Fluidfluss durch das Verteilerrohr 50 möglich ist.

Die Wasserlöschanlage 1 umfasst eine Steuereinheit 12, die dem Ansteuern des Testlaufs der Pumpe dient. In der beispielhaften Ausführung der Fig. 1 ist die Steuereinheit 12 gemeinsam mit der Sprinklerüberwachungszentrale 14 ein Teil einer Zentraleinheit, die extern zur BMZ 10 angeordnet ist. In einigen Ausführungen kann die Steuereinheit 12 auch als Teil der BMZ 10 ausgestaltet sein. In einigen Ausführungen kann die Steuereinheit 12 auch als separates Element, das örtlich von der BMZ 10 und/oder der Sprinklerüberwachungszentrale 14 getrennt ist, ausgestaltet sein.

Erfindungsgemäß kann in der Wasserlöschanlage 1 ein automatisierter Testlauf der Pumpe durchgeführt werden. Hierzu erzeugt die Steuereinheit 12 ein entsprechendes Steuersignal und gibt dieses Steuersignal über die Signalverbindung 70 an das Öffnungsorgan 2 aus. In Reaktion auf das Steuersignal bewegt sich Öffnungsorgan 2 von einer Verschlussposition, in der es den Fluidfluss durch die Probierleitung 40 sperrt, in die Öffnungsposition, in der ein Fluidfluss durch die Probierleitung 40 besteht.

In der Ausführungsform gemäß Fig.1 wird dieses Öffnen durch mittels eines Motorschiebers durchgeführt, der durch das Steuersignal veranlasst wurde, das Öffnungsorgan von der Verschlussposition in die Öffnungsposition zu bewegen. Das Öffnen des Öffnungsorgans 2 erlaubt einen Fluidfluss des Löschfluids von der Abzweigung 42, durch die Probierleitung 40 zum Rückfluss 44 in den Vorratsbehälter 20.

In der beispielhaften Ausführungsform der Fig. 1 gibt die Steuereinheit 12 ferner ein Steuersignal über die Signalleitung 71 an das Verteilerrohrabsperrorgan 3. Das Verteilerrohrabsperrorgan 3 bewegt sich in Reaktion auf das Steuersignal von der Durchflussposition in die Absperrposition und sperrt somit den Fluidfluss durch das Verteilerrohr 50 in Richtung Alarmventil 60.

Ferner veranlasst die Steuereinheit 12 einen Start der Pumpe 30 zum Zwecke des Testlaufs der Pumpe 30 durch Verringerung des Drucks an der Pumpenstarteinrichtung (in der Fig. 1 nicht gezeigt). Die Pumpe 30 wird daher gestartet. Anschließend wird der Startdruck, welcher dem Druck zum Zeitpunkt des Anlaufens der Pumpe 30 entspricht, gemessen und aufgezeichnet und der Testlauf durchgeführt werden, bis die normalen Betriebskennwerte des Antriebsmotors der Pumpe 30 erreicht sind. Sodann wird das Öffnungsorgan 2 mittels eines entsprechenden Steuersignals über die Signalleitung 70 von der Öffnungsposition in die Verschlussposition bewegt und sperrt so den Fluidfluss durch die Probierleitung 40. Damit kann kein weiteres Löschfluid in die Probierleitung 40 geraten. Mittels eines weiteren Signals kann die Steuereinheit 12 die Pumpe wieder abschalten.

Gleichsam übermittelt die Steuereinheit 12 auch ein Signal über die Signalleitung 71 an das Verteilerrohrabsperrorgan 3, welches sich in Reaktion auf dieses Signal von der Absperrposition in die Durchflussposition bewegt und so einen Fluidfluss durch das Verteilerrohr 50 in Richtung des Alarmventils 60 erlaubt.

Kommt es während eines derartigen Testlaufs der Pumpe 30 zu einem Auslösen der Wasserlöschanlage 1, bei dem das Löschfluid durch das Rohrnetz 82 zu der Vielzahl von Sprinklern 80 geleitet wird, ermöglicht die vorliegende Erfindung ein sofortiges Abschalten des Testlaufs der Pumpe 30. Hierzu ist erfindungsgemäß Absperrorgan 4 vorgesehen, welches eingerichtet ist, den Pumpentest-Kreislauf sofort zu schließen, so dass kein Löschfluid mehr in den Kreislauf hineinfließen kann.

In der bevorzugten Ausführungsform gemäß Fig. 1 wird das Absperrorgan 4 durch einen Auslöseschalter aktiviert, der hier durch den ersten Druckschalter 62 verwirklicht ist. Dies geschieht dadurch, dass das Absperrorgan beim Start des Testlaufs der Pumpe durch Anlegen eines entsprechenden Signals von der Steuereinheit über die Signalleitung 72 von seinem energetisch günstigen Grundzustand (der Sperrposition) in die Entsperrposition gebracht und in dieser Entsperrposition gehalten wird. Der erste Druckschalter 62 schaltet aufgrund des Druckabfalls durch das Auslösen der Wasserlöschanlage 1. Der erste Druckschalter 62 ist kommunikativ mit der Signalleitung 72 verbunden. Beim Schalten des ersten Druckschalters wird der Signalfluss über die Signalleitung 72 unterbunden. Dadurch wird das Absperrorgan 4 nicht länger in der Entsperrposition gehalten. In Antwort auf das Aktivieren des Druckschalters bewegt sich das Absperrorgan 4 also in die Sperrposition. Hierdurch wird der Testlauf der Pumpe sofort beendet und das Löschfluid sowie die Funktionalität der Pumpe 30 stehen voll dem Löschvorgang zur Verfügung.

Da in der beispielhaften Ausführungsform der Fig. 1 während des Testlaufs der Fluidfluss durch das Verteilerrohr 50 ferner durch das Verteilerrohrabsperrorgan 3 unterbrochen ist, während der Testlauf der Pumpe läuft, wird hier ein Signal von der Steuereinheit über die Signalleitung 73 an das Verteilerrohrabsperrorgan 3 übermittelt. Dieses Signal veranlasst das Verteilerrohrabsperrorgan 3, sich aus seiner energetisch begünstigten Durchflussposition in die Sperrposition zu bewegen und hält das Verteilerrohrabsperrorgan 3 in dieser Position. Bei Schalten des Druckschalters 62 wird das Signal über Signalleitung 73 unterbrochen. Hierdurch bewegt sich das Verteilerrohrabsperrorgan wieder in die Durchflussposition. Auf diese Weise wird der Fluidfluss durch das Verteilerrohr 50 freigegeben.

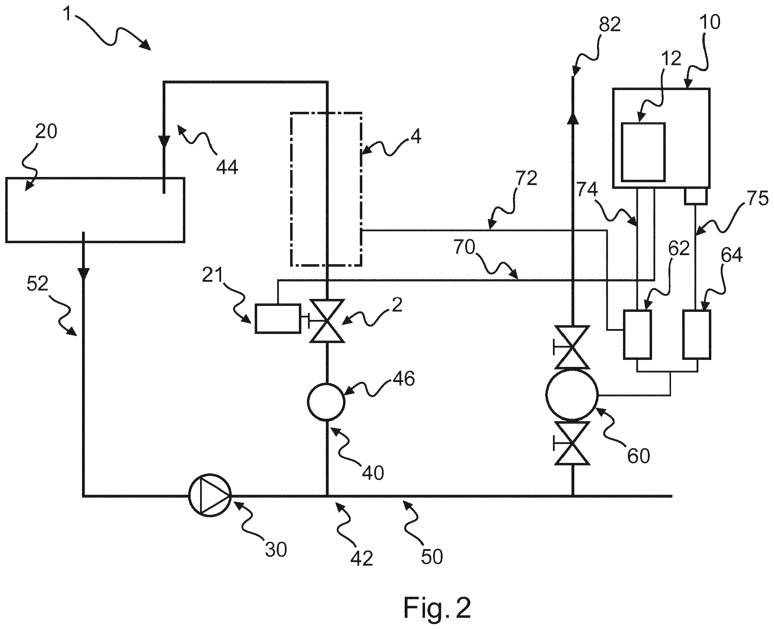

Die Fig. 2 zeigt schematisch einen Ausschnitt aus einer erfindungsgemäßen Wasserlöschanlage 1 gemäß einer bevorzugten Ausführungsform. Wie schon im Zusammenhang mit Fig. 1 beschrieben, umfasst die Wasserlöschanlage 1 einen Vorratsbehälter 20, der über eine Saugleitung 52 mit Pumpe 30 verbunden ist. Pumpe 30 dient dazu, das Löschfluid über die Saugleitung 52 in das Verteilerrohr 50 zu fördern. Verteilerrohr 50 umfasst eine Probierleitungs-Abzweigung 42, an welcher die Probierleitung 40 vom Verteilerrohr 50 abgezweigt wird.

Entlang der Probierleitung 40 zwischen Abzweigung 42 und Rückfluss 44 ist ein Sensor 46 angeordnet, der in der beispielhaften Ausführungsform der Fig. 2 als Durchflussmessgerät ausgestaltet ist, welches der Bestimmung des Durchflusses durch die Probierleitung 40 während des Testlaufs der Pumpe 30 dient. Das Durchflussmessgerät 46 ist über eine Signalleitung (nicht gezeigt) mit einer Auswerteinheit verbunden, die die durch das Durchflussmessgerät 46 ermittelten Messwerte auswertet und an einen Nutzer ausgibt.

Ferner sind das Öffnungsorgan 2 und das Absperrorgan 4 entlang der Probierleitung 40 angeordnet.

Das Verteilerrohr 50 verbindet die Pumpe 30 mit dem Alarmventil 60, welches einen ersten Druckschalter 62, der in der beispielhaften Ausführung der Fig. 2 als Auslöseschalter agiert, und einen zweiten Druckschalter 64 aufweist. Der erste Druckschalter ist über eine Signalleitung 74 mit einer Steuereinheit 12 innerhalb der BMZ 10 und über eine Signalleitung 72 mit dem Absperrelement 4 verbunden, ist also entlang der Signalleitung 72, 74 zwischen dem Absperrelement 4 und der Steuereinheit 12 angeordnet. Die Zusammenfassung der Steuereinheit 12 in der BMZ 10 ist eine rein örtliche. In anderen Ausführungsformen der erfindungsgemäßen Wasserlöschanlage kann die Steuereinheit 12 auch separat von der BMZ 10 bereitgestellt werden. Der zweite Druckschalter 64 ist über eine Alarmierungsleitung 75 mit der Alarmierung der Wasserlöschanlage 1 verbunden.

Die Steuereinheit 12 innerhalb der BMZ 10 ist über eine Signalleitung 70 mit einem Motor 21 des Öffnungsorgans 2 verbunden. Beim Starten des Testlaufs der Pumpe übermittelt Steuereinheit 12 über die Signalleitung 70 ein Signal an den Motor 21, der sodann das Öffnungsorgan 2 in die Öffnungsposition bringt. Ferner übermittelt die Steuereinheit 12 ein Signal an die Pumpenstarteinrichtung, um die Pumpe zu starten, wie voranstehend beschrieben. Am Ende des Testlaufs der Pumpe 30 übermittelt die Steuereinheit ein Signal an die Pumpe, um diese zu deaktivieren. Ferner übermittelt die Steuereinheit wieder ein Signal über die Signalleitung 70 an den Motor 21. In Reaktion auf dieses Signal fährt Motor 21 das Öffnungsorgan 2 wieder in die Verschlussposition.

Der erste Druckschalter 62 weist ferner eine Signalleitung 72 zum Absperrorgan 4 auf. Wird die Wasserlöschanlage wie im Zusammenhang mit Fig. 1 beschrieben während des Testlaufs der Pumpe 30 ausgelöst, unterbricht der erste Druckschalter 62 ein Signal, welches über die Signalleitungen 72 und 74 von der Steuereinheit an das Absperrorgan 4 übermittelt wird, um das Absperrorgan 4 in der Entsperrposition zu halten. Durch dieses Unterbrechen wird das Absperrorgan 4 aktiviert, bewegt sich also von der Entsperr- in die Sperrposition und unterbricht so den Testlauf der Pumpe unmittelbar, so dass das gesamte Löschfluid für die Wasserlöschanlage 1 zur Verfügung steht.

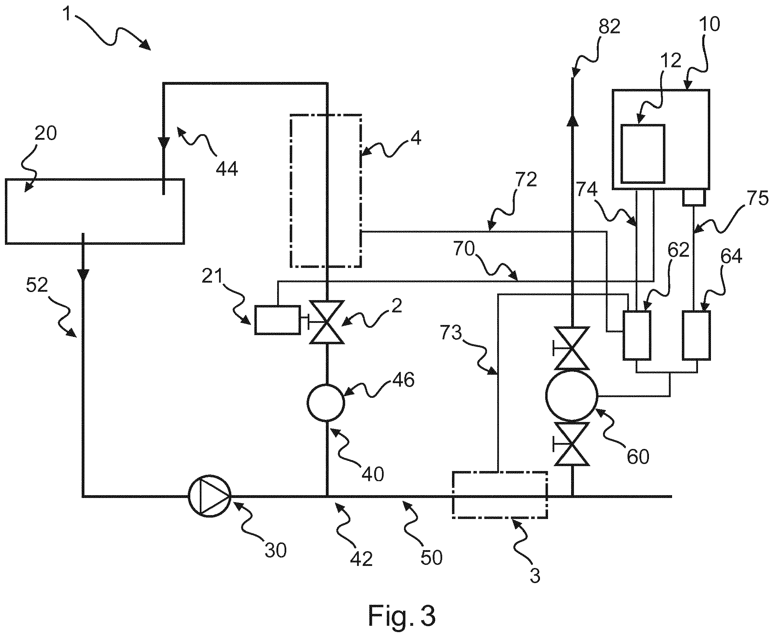

Fig. 3 zeigt schematisch eine Modifikation der Ausführungsform der Fig. 2. Daher entspricht der Aufbau gemäß Fig. 3 größtenteils dem der Fig. 2. An dieser Stelle bedeuten gleiche Bezugszeichen insbesondere gleiche Elemente der Erfindung.

Die Ausführungsform der Fig. 3 unterscheidet sich von der der Fig. 2 lediglich dahingehend, dass in dem Verteilerrohr 50 ferner ein Verteilerrohrabsperrorgan 3 angeordnet ist, welches dazu eingerichtet ist, den Fluidfluss durch das Verteilerrohr 50 während des Testlaufs der Pumpe 30 zu unterbrechen. Das bedeutet also, dass im Falle eines Pumpentestlaufs ein Signal über die Signalleitungen 73 und 74 an das Verteilerohrabsperrorgan 3 übermittelt wird, welches das Verteilerrohrabsperrorgan 3 veranlasst, sich von der Durchflussposition in die Absperrposition zu bewegen und so den Fluidfluss durch das Verteilerrohr 50 hin zum Alarmventil 60 zu unterbrechen. Das Signal hält dann das Verteilerrohrabsperrorgan 3, wie bereits beschrieben, in der Absperrposition. Bei Abschluss des Testlaufs der Pumpe wird das Signal über die Signalleitungen 73 und 73 unterbrochen, wodurch sich das Verteilerrohrabsperrorgan 3 wieder in die energetisch bevorzugte Durchflussposition bewegt.

Kommt es während des Testlaufs der Pumpe 30 zu einem Auslösen der Wasserlöschanlage 1, so bewirkt dies einen Druckabfall innerhalb des Rohrnetzes. Hierbei schaltet der Druckschalter 62, welcher in der Ausführung der Fig. 3 als Auslöseschalter dient, in Antwort auf das Absinken des Drucks innerhalb des Rohrnetzes. Dieses Schalten unterbricht das Signal, welches über die Signalleitungen 73 und 74 übermittelt wird, wodurch sich das. Verteilerrohrabsperrorgan 3 in die energetisch günstigere Durchflussposition bewegt.

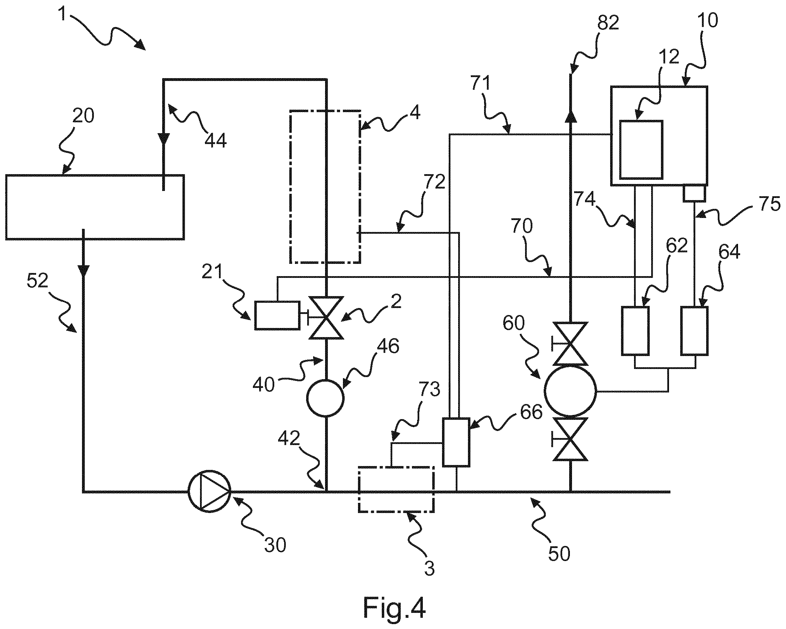

Fig. 4 zeigt schematisch eine weitere Ausführungsform der Erfindung. Hierbei entspricht der Aufbau gemäß Fig. 4 größtenteils dem der Figuren 2 und 3. An dieser Stelle bedeuten gleiche Bezugszeichen insbesondere gleiche Elemente der Erfindung. Die Ausführungsform der Fig. 4 unterscheidet sich von der der Fig. 2 lediglich dahingehend, dass der Auslöseschalter, der im Falle eines Auslösens der Wasserlöschanlage 1 die Signale zum Halten des Absperrorgans 4 in der Entsperrposition und zum Halten des Verteilerrohrabsperrorgans 3 in der Absperrposition unterbricht, nicht durch einen der Druckschalter 62 und 64, die am Alarmventil 60 angeordnet sind verwirklicht wird, sondern durch einen zusätzlichen , dedizierten Auslöseschalter 66, der unmittelbar am Verteilerrohr 50 angeordnet ist. Dieser Auslöseschalter 66 kann insbesondere als Druckschalter ausgeführt sein. Alternativ kann der Auslöseschalter auch als Durchflussschalter oder vergleichbar ausgeführt werden. Der Druckschalter 66 ist hierbei der Verbindung zwischen Steuereinheit 12 und Absperrorgan 4 über die Signalleitungen 71 und 72 und der Verbindung zwischen Steuereinheit 12 und Verteilerrohrabsperrorgan 3 über die Signalleitungen 71 und 73 zwischengeschaltet.

Im Falle des Auslösens der Wasserlöschanlage 1 schaltet der Druckschalter 66 aufgrund des Druckabfalls im Rohrnetz, und entsprechend im Verteilerohr 50. Das Schalten des Druckschalters 66 bewirkt eine Unterbrechung des Signals, welches über die Signalleitungen 71 und 72 an das Absperrorgan 4 geleitet wird. In Antwort auf dieses Unterbrechen bewegt sich das Absperrorgan 4 von der Entsperrposition in die energetisch günstigere Sperrposition und unterbricht so die Versorgung der Probierleitung 40 mit Löschfluid. Ferner bewirkt das Schalten des Druckschalters 66 eine Unterbrechung des Signals, welches über die Signalleitungen 71 und 73 an das Verteilerrohrabsperrorgan 3 geleitet wird. In Antwort hierauf bewegt sich das Verteilerrohrabsperrorgan 3 von der Absperrposition in die energetisch günstigere Durchflussposition und gibt so die Versorgung des Verteilerrohrs 50 mit Löschfluid frei. Hierdurch steht das Löschfluid gänzlich dem Verteilerrohr 50 und dem Rohrnetz 82 zur Verfügung.

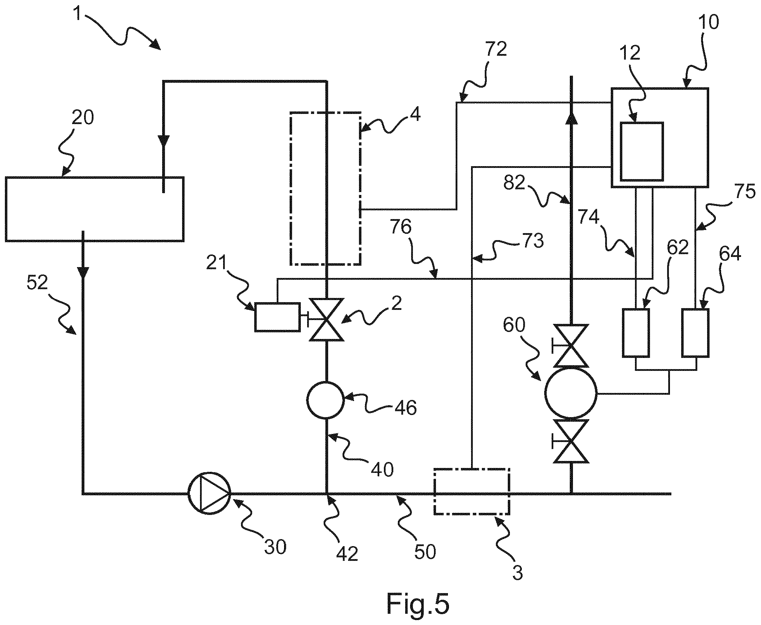

Die Fig. 5 zeigt schematisch einen Ausschnitt aus einer erfindungsgemäßen Wasserlöschanlage 1 gemäß einer weiteren Ausführungsform. Auch hier sind gleiche Elemente mit gleichen Bezugszeichen versehen. Im Unterschied zu den Ausführungsformen der Figuren 2 bis 4 werden die Signale zur Aktivierung des Absperrorgans 4 und zur Deaktivierung des Verteilerrohrabsperrorgans 3 nicht durch einen Auslöseschalter, sondern durch die Steuereinheit 12 in der Brandmelder- und/oder Löschsteuerzentrale (BMZ) 10 erzeugt und an das Absperrorgan 4 und das Verteilerrohrabsperrorgan 3 übermittelt.

In dieser Ausführungsform erhält die BMZ 10 bevorzugt ein Branddetektionssignal. Dieses Branddetektionssignal kann von einem oder mehreren Brandmeldern ausgegeben werden, die mittels entsprechender Sensoren eine oder mehrere Brandkenngrößen ermitteln und auf Basis der Brandkenngrößen einen Brand detektieren können. Wenn die BMZ 10 ein solches Branddetektionssignal erhält, leitet die BMZ 10 mehrere Vorgänge ein. Die BMZ 10 bewirkt eine Auslösung der Wasserlöschanlage. In der Ausführungsform der Fig. 5 informiert die BMZ 10 ferner die Steuereinheit 12 über das Auslösen. Die Steuereinheit 12 erzeugt sodann ein Signal zur Aktivierung des Absperrorgans 4 sowie ein Signal zur Deaktivierung des Verteilerrohrabsperrorgans 3. Das Signal zur Aktivierung des Absperrorgans 4 wird hierbei über die Signalleitung 72 von der innerhalb der BMZ 10 angeordneten Steuereinheit 12 an das Absperrorgan 4 übermittelt. In Antwort auf Signal bewegt sich das Absperrorgan 4 von der Entsperr- in die Sperrposition und schließt so unmittelbar die Versorgung des Pumpentestkreislaufs. Das Signal zur Deaktivierung des Verteilerrohrabsperrorgans wird über die Signalleitung 73 von der Steuereinheit 12 in der BMZ 10 an das Verteilerrohrabsperrorgan 3 übermittelt. In Antwort auf das Signal bewegt sich das Verteilerrohrabsperrorgan 3 von der Absperrposition in die Durchflussposition und gibt so den Fluidfluss durch das Verteilerrohr 50 zum Alarmventil 60 frei.

Die Steuereinheit 12 kann hierbei grundsätzlich ein Signal zur Aktivierung des Absperrorgans 4 und ein Signal zur Deaktivierung des Verteilerrohrabsperrorgans 5 erzeugen und entsprechend ausgeben, so dass das Absperrorgan 4 grundsätzlich aktiviert und das Verteilerrohrabsperrorgan 3 grundsätzlich deaktiviert wird, sobald die Wasserlöschanlage 1 auslöst. In einigen Ausführungen kann die Steuereinheit 12 auch zunächst bestimmen, beispielsweise mittels eines entsprechenden Testsignals, ob zum gegebenen Zeitpunkt ein Testlauf der Pumpe durchgeführt wird und nur im Falle eines durchgeführten Testlaufs der Pumpe entsprechende Signale ausgeben. In diesem Fall werden das Absperrorgan 4 und das Verteilerrohrabsperrorgan 3 also nur angesteuert, wenn es tatsächlich nötig ist. Falls zum gegebenen Zeitpunkt kein Testlauf der Pumpe im Gange war, unterbleibt die Ansteuerung hingegen.

Auch wenn im Zusammenhang mit der Fig. 5 die Steuereinheit 12 die Signale erzeugt und ausgibt, können diese Signale in anderen Ausführungsformen auch durch die BMZ 10 ausgegeben werden. Ferner kann die Steuereinheit 12, die in der Fig. 5 innerhalb der BMZ 10 angeordnet ist, auch außerhalb der BMZ 10 angeordnet sein. Auch sind Ausführungsformen denkbar, in denen ein Signal (an das Absperrorgan 4 oder das Verteilerrohrabsperrorgan 3) durch die BMZ 10 und/oder die Steuereinheit 12 ausgegeben wird. Ferner sind weitere Modifikationen denkbar.

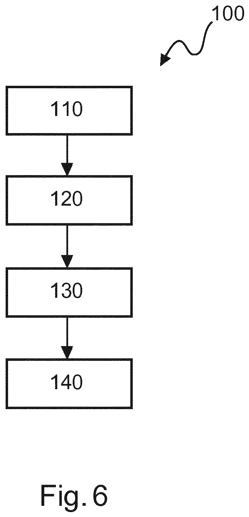

Fig. 6 zeigt ein Ablaufdiagram für ein Verfahren zum Kontrollieren einer erfindungsgemäßen Wasserlöschanlage 100. Insbesondere zeigt Fig. 6 ein Verfahren zur Durchführung eines automatisierten Testlaufs der Pumpe 30, insbesondere eine Sprinklerpumpe, in einer Wasserlöschanlage 1.

Im Schritt 110 wird der Testlauf der Pumpe eingeleitet. Hierzu wird das Öffnungsorgan 2 innerhalb der Probierleitung 40 geöffnet. In der spezifischen Ausführungsform der Fig. 6 wird das Öffnungsorgan innerhalb der Probierleitung 40 angesteuert, um es zu öffnen. Dieses Ansteuern erfolgt bevorzugt durch die Steuereinheit 12. Die Steuereinheit 12 veranlasst das Öffnungsorgan 2, sich von der Verschlussposition in die Öffnungsposition zu bewegen. Hierdurch wird der Testkreislauf, der durch den Vorratsbehälter 20, die Saugleitung 52 und die Probierleitung 40 gebildet wird, geöffnet. Anschließend wird der Wasserdruck an der Pumpenstarteinrichtung vermindert. Dieses Absenken kann ebenfalls insbesondere durch die Steuereinheit geschehen. Durch den Druckabfall startet die Pumpe sodann. Ferner kann die Steuereinheit 12 eingerichtet sein, ein Verteilerrohrabsperrorgan 3 anzusteuern, wenn ein Verteilerrohrabsperrorgan 3 innerhalb der Wasserlöschanlage vorhanden ist, um das Verteilerrohrabsperrorgan 3 von der Durchflussposition in die Absperrposition zu bewegen. In einigen Ausführungsformen kann das Verschließen des Verteilerrohrs mittels des Verteilerrohrabsperrorgans 3 zu Beginn des Testlaufs der Pumpe 30 auch manuell durchgeführt werden.

In Schritt 120 werden mittels entsprechender Sensoren und Messvorrichtungen, wie beispielsweise einem Drucksensor, oder einer Volumenstrommessvorrichtung Messwerte ermittelt und an die Steuereinheit 12 gesendet, die es erlauben, den Zustand der zu testenden Pumpe zu ermitteln. Diese Messwerte werden in der Steuereinheit 12 abgespeichert und ausgewertet. Die ausgewerteten Messergebnisse werden dann an einen Nutzer ausgegeben, der diese zu Bewertung des Testlaufs verwenden kann.

In Schritt 130 erhält die Steuereinheit 12 ein Auslösesignal, das angibt, dass die Wasserlöschanlage ausgelöst hat. In Antwort auf dieses Auslösesignal erzeugt die Steuereinheit 12 ein Signal zur Aktivierung des Absperrorgans 4 und ein Signal zur Deaktivierung des Verteilerrohrabsperrorgans 3. Diese Signale werden entsprechend an das Absperrorgan 4 und das Verteilerrohrabsperrorgan übermittelt. In Reaktion auf den Erhalt des Signals sperrt das Absperrorgan 4 den Fluidfluss durch die Probierleitung 40 und damit den Fluidfluss innerhalb des Testkreislaufs. Das Verteilerrohrabsperrorgan 3 bewegt sich in Reaktion auf das Signal aus der Absperrposition in die Durchflussposition und gibt so den Fluidfluss durch das Verteilerrohr 50 hin zum Alarmventil 60 frei. Das bedeutet, dass im Falle eines Brandes der Testlauf der Pumpe 30 unmittelbar und vollkommen automatisch beendet werden kann, wobei das Löschfluid vollständig dem Verteilerrohr 50 und dem Rohrnetz 82 zur Verfügung steht und somit für den Löschvorgang verwendet werden kann.

In der spezifischen Ausführungsform der Fig. 6 erzeugt die Steuereinheit 12 das Signal zur Aktivierung des Absperrorgans 4 und zur Deaktivierung des Verteilerrohrabsperrorgans 3. In anderen Ausführungsformen können diese Signale aber auch vollständig oder teilweise durch andere Elemente, beispielsweise die BMZ 10 erzeugt werden. In noch weiteren Ausführungsformen kann die Aktivierung des Absperrorgans 4 und/oder die Deaktivierung des Verteilerrohrabsperrorgans 3 auch mittels des Auslöseschalter, wie voranstehend beschrieben, erfolgen. Die Funktionalität der Steuereinheit, die durch den einen oder die mehreren Sensoren bestimmten Messwerte auszuwerten und abzuspeichern wird hiervon nicht beeinflusst.

Weitere mögliche Kombinationen und Ausführungsformen der Erfindung sind denkbar und ergeben sich für den Fachmann unmittelbar aus dem vorherigen Kontext.

### Liste der Bezuqszeichen:

- 1: Wasserlöschanlage
- 2: Öffnungsorgan
- 3: Verteilerrohrabsperrorgan
- 4: Absperrorgan
- 10: Brandmelder- und/oder Löschsteuerzentrale (BMZ)
- 12: Steuereinheit
- 14: Sprinklerüberwachungszentrale
- 20: Fluidversorgung
- 21: Motorschieber Öffnungsorgan
- 30: Pumpe
- 40: Probierleitung
- 42: Probierleitungs-Abzweigung
- 44: Rückfluss in Fluidversorgung
- 46: Sensor
- 50: Verteilerrohr
- 52: Saugleitung
- 60: Alarmventil
- 62, 66: Auslöseschalter
- 64: zweiter Druckschalter
- 70: Signalleitung
- 71: Signalleitung
- 72: Signalleitung
- 73: Signalleitung
- 74: Signalleitung
- 75: Alarmierungsleitung
- 76: Signalleitung
- 80: Sprinkler
- 82: Rohrnetz
- 100: Verfahren zum Kontrollieren einer Wasserlöschanlage
- 110: Einleiten des Testlaufs der Pumpe
- 120: Speichern und Auswerten von Messwerten
- 130: Erhalten eines Auslösesignals
- 140: Abbrechen des Testlaufs der Pumpe

## Patentansprüche

1. Wasserlöschanlage (1), umfassend
- eine Fluidversorgung (20) zur Bereitstellung eines Löschfluids
- eine Pumpe (30), die zum Fördern des Löschfluids aus der Fluidversorgung (20) in ein Verteilerrohr (50) eingerichtet ist,
- eine Probierleitung (40), die von dem Verteilerrohr (50) abzweigt und dazu eingerichtet ist, das von der Pumpe (30) geförderte Löschfluid zu leiten,
wobei die Probierleitung (40) ein Öffnungsorgan (2) aufweist, das dazu eingerichtet ist, die Probierleitung (40) bei einem Testlauf der Pumpe (30) zu öffnen,
wobei die Probierleitung (40) ein Absperrorgan (4) aufweist, das dazu eingerichtet ist, die Probierleitung (40) bei einem Auslösen der Wasserlöschanlage (1) zu schließen;
**dadurch gekennzeichnet, dass** die Wasserlöschanlage (1) ferner eine Steuereinheit (12) umfasst, die dazu eingerichtet ist, einen automatischen Testlauf der Pumpe (30) zu steuern und bei einem Auslösen der Wasserlöschanlage (1) den automatischen Testlauf abzubrechen und die Probierleitung (40) mittels des Absperrorgans (4) zu schließen.

2. Wasserlöschanlage (1), nach Anspruch 1, wobei das Absperrorgan (4) eingerichtet ist, sich bei dem Auslösen der Wasserlöschanlage (1) von einer Entsperrposition in eine Sperrposition zu bewegen, in der das Absperrorgan (4) die Probierleitung (40) schließt, wobei die Sperrposition einer energetisch günstigen Grundposition des Absperrorgans (4) entspricht.

3. Wasserlöschanlage (1) nach den Ansprüchen 1 oder 2, wobei das Verteilerrohr (50) ein Verteilerrohrabsperrorgan (3) aufweist, das dazu eingerichtet ist, einen Fluidfluss durch das Verteilerrohr (50) bei einem Testlauf der Pumpe (30) zu unterbrechen, wobei das Verteilerrohrabsperrorgan (3) ferner eingerichtet ist, bei dem Auslösen der Wasserlöschanlage (1) den Fluidfluss durch das Verteilerrohr (50) freizugeben.

4. Wasserlöschanlage (1) nach einem der vorherigen Ansprüche, wobei das Öffnungsorgan (2) und/oder das Absperrorgan (4) und/oder das Verteilerrohrabsperrorgan (3) automatisiert angesteuert werden.

5. Wasserlöschanlage (1) nach einem der vorherigen Ansprüche, wobei die Wasserlöschanlage (1) ferner einen Auslöseschalter (62, 64, 66) aufweist, wobei der erste Auslöseschalter (62, 64, 66) dazu eingerichtet ist bei einem Auslösen der Wasserlöschanlage (1) die Probierleitung (40) mittels des Absperrorgans (4) zu schließen.

6. Wasserlöschanlage (1) nach Anspruch 5, wobei
die Wasserlöschanlage (1) ein Alarmventil (60) aufweist, wobei das Alarmventil (60) den Auslöseschalter (62, 64) aufweist; oder
wobei der Auslöseschalter (66) an dem Verteilerrohr (50) nach der Abzweigung (42) der Probierleitung (40) angeordnet ist.

7. Wasserlöschanlage (1) nach einem der vorstehenden Ansprüche, die weiter eine Brandmelder- und/oder Löschsteuerzentrale (10) aufweist, wobei die Brandmelder- und/oder Löschsteuerzentrale (10) dazu eingerichtet ist bei einem Auslösen der Wasserlöschanlage die Probierleitung (40) mittels des Absperrorgans (4) zu schließen.

8. Wasserlöschanlage (1) nach einem der Ansprüche 2 bis 7, wobei das Absperrorgan (4) und/oder das Verteilerrohrabsperrorgan (3) mit wenigstens einer der folgenden Verschlusseinrichtungen ausgebildet ist:
- einem Sprühflutventil,
- einem vorgesteuerten Magnetventil,
- einem direkt gesteuerten Magnetventil und
- einem ausfallsicheren Motorschieber; bevorzugt
wobei die Auslösung des Absperrorgans (4) und/oder des Verteilerrohrabsperrorgans (3) eine hydraulische, pneumatische, elektrische und/oder pneumatisch-elektrischer Auslösung aufweist.

9. Wasserlöschanlage (1) nach einem der vorherigen Ansprüche, wobei die Steuereinheit (12) dazu eingerichtet ist, bei einem Auslösen der Wasserlöschanlage (1) den Fluidfluss durch das Verteilerrohr (50) mittels des Verteilerrohrabsperrorgans (5) freizugeben.

10. Steuereinheit (12) zur Steuerung eines automatischen Pumpentestlaufs einer Wasserlöschanlage (1), insbesondere einer Wasserlöschanlage (1) nach einem der vorstehenden Ansprüche, wobei die Steuereinheit (12) dazu eingerichtet ist:
- einen automatischen Testlauf der Pumpe (30) zu starten,
- ein Auslösesignal, das für ein Auslösen der Wasserlöschanlage (1) indikativ ist, zu erhalten und
- den Testlauf durch Ansteuern eines Absperrorgans (4) der Probierleitung (40) abzubrechen, wenn das Auslösesignal erhalten wird.

11. Steuereinheit (12) nach Anspruch 10, wobei die Steuereinheit (12) ferner eingerichtet ist:
- ein Verteilerrohrabsperrorgan (3) in einem Verteilerrohr (50) der Wasserlöschanlage anzusteuern, wobei das Verteilerrohrabsperrorgan (3) eingerichtet ist, in Antwort auf das Ansteuern einen Fluidfluss durch das Verteilerrohr (50) zu unterbrechen, und
- das Verteilerrohrabsperrorgan (3) erneut anzusteuern, wobei das Verteilerrohrabsperrorgan (3) eingerichtet ist, in Antwort auf das erneute Ansteuern den Fluidfluss durch ein Verteilerrohr (50) der Wasserlöschanlage wieder freizugeben; und/oder
- Messwerte wenigstens eines in oder an der Probierleitung (40) angeordneten Sensors zu speichern und auszuwerten.

12. Verfahren zum Steuern einer Wasserlöschanlage (1), insbesondere einer Wasserlöschanlage (1) nach einem der Ansprüche 1 bis 10, umfassend das Durchführen eines Testlaufs einer Pumpe (30) der Wasserlöschanlage (1), wobei das Verfahren (100) die folgenden Schritte umfasst:
- Starten des Testlaufs der Pumpe,
- Erhalten (130) eines Auslösesignals, das für ein Auslösen der Wasserlöschanlage (1) indikativ ist, und
- Abbrechen (140) des Testlaufs durch Ansteuern eines Absperrorgans (4) in der Probierleitung (40), wenn das Auslösesignal erhalten wird.

13. Verfahren nach Anspruch 12, weiterhin umfassend
- Ansteuern eines Verteilerrohrabsperrorgans (3) in einem Verteilerrohr (50) der Wasserlöschanlage, um einen Fluidfluss durch das Verteilerrohr (50) zu unterbrechen, und
- erneutes Ansteuern des Verteilerrohrabsperrorgans (3), um den Fluidfluss durch ein Verteilerrohr (50) wieder freizugeben; und/oder
- Abspeichern und Auswerten (120) von Messwerten wenigstens eines in oder an der Probierleitung (40) angeordneten Sensors.

14. Verfahren nach einem der Ansprüche 12 oder 13, wobei das Starten des Testlaufs ein Ansteuern des Öffnungsorgans (2) einer Probierleitung (40) umfasst.

## Claims

1. Water extinguishing system (1), comprising
- a fluid supply (20) for providing an extinguishing fluid,
- a pump (30) which is configured for conveying the extinguishing fluid into a distributor pipe (50) from the fluid supply (20),
- a test line (40) which branches off from the distributor pipe (50) and which is configured for guidance of the extinguishing fluid conveyed by the pump (30),
wherein the test line (40) has an opening member (2) which is configured to open the test line (40) at the time of a test run of the pump (30),
**wherein**
the test line (40) has a shut-off member (4) which is configured to close the test line (40) in the event of the water extinguishing system (1) being triggered;
**characterized in that** the water extinguishing system (1) furthermore comprises a control unit (12) which is configured to control an automatic test run of the pump (30), and to abort the automatic test run, and to close the test line (40) by means of the shut-off member (4), in the event of the water extinguishing system (1) being triggered.

2. Water extinguishing system (1) according to Claim 1, wherein the shut-off member (4) is configured to move from a release position into a blocking position, in which the shut-off member (4) closes the test line (40), in the event of the water extinguishing system (1) being triggered, wherein the blocking position corresponds to an energetically favourable home position of the shut-off member (4).

3. Water extinguishing system (1) according to Claim 1 or 2, wherein the distributor pipe (50) has a distributor pipe shut-off member (3) which is configured to interrupt a fluid flow through the distributor pipe (50) at the time of a test run of the pump (30), wherein the distributor pipe shut-off member (3) is furthermore configured to release the fluid flow through the distributor pipe (50) in the event of the water extinguishing system (1) being triggered.

4. Water extinguishing system (1) according to one of the preceding claims, wherein the opening member (2) and/or the shut-off member (4) and/or the distributor pipe shut-off member (3) are actuated in an automated manner.

5. Water extinguishing system (1) according to one of the preceding claims, wherein the water extinguishing system (1) furthermore has a trigger switch (62, 64, 66), wherein the first trigger switch (62, 64, 66) is configured to close the test line (40) by means of the shut-off member (4) in the event of the water extinguishing system (1) being triggered.

6. Water extinguishing system (1) according to Claim 5, wherein
the water extinguishing system (1) has an alarm valve (60), wherein the alarm valve (60) has the trigger switch (62, 64); or
wherein the trigger switch (66) is arranged on the distributor pipe (50) after the branch point (42) of the test line (40).

7. Water extinguishing system (1) according to one of the preceding claims, which furthermore has a fire alarm and/or extinguishing control panel (10), wherein the fire alarm and/or extinguishing control panel (10) is configured to close the test line (40) by means of the shut-off member (4) in the event of the water extinguishing system being triggered.

8. Water extinguishing system (1) according to one of Claims 2 to 7, wherein the shut-off member (4) and/or the distributor pipe shut-off member (3) are/is formed with at least one of the following closure devices:
- a deluge valve,
- a pilot-controlled solenoid valve,
- a directly controlled solenoid valve, and
- a fail-safe motorized slide valve; preferably
wherein the trigger means of the shut-off member (4) and/or of the distributor pipe shut-off member (3) has a hydraulic, pneumatic, electrical and/or pneumatic/electrical trigger means.

9. Water extinguishing system (1) according to one of the preceding claims, wherein the control unit (12) is configured to release the fluid flow through the distributor pipe (50) by means of the distributor pipe shut-off member (5) in the event of the water extinguishing system (1) being triggered.

10. Control unit (12) for controlling an automatic pump test run of a water extinguishing system (1), in particular a water extinguishing system (1) according to one of the preceding claims, wherein the control unit (12) is configured:
- to start an automatic test run of the pump (30),
- to receive a trigger signal, which is indicative of triggering of the water extinguishing system (1), and
- to abort the test run by way of actuation of a shut-off member (4) of the test line (40) upon receipt of the trigger signal.

11. Control unit (12) according to Claim 10, wherein the control unit (12) is furthermore configured:
- to actuate a distributor pipe shut-off member (3) in a distributor pipe (50) of the water extinguishing system, wherein the distributor pipe shut-off member (3) is configured to interrupt a fluid flow through the distributor pipe (50) in response to the actuation, and
- to actuate the distributor pipe shut-off member (3) again, wherein the distributor pipe shut-off member (3) is configured to release the fluid flow through a distributor pipe (50) of the water extinguishing system again in response to the renewed actuation; and/or
- to store and to evaluate measurement values of at least one sensor arranged in or at the test line (40) .

12. Method for controlling a water extinguishing system (1), in particular a water extinguishing system (1) according to one of Claims 1 to 10, comprising carrying out a test run of a pump (30) of the water extinguishing system (1), wherein the method (100) comprises the following steps:
- starting the test run of the pump,
- receiving (130) a trigger signal, which is indicative of triggering of the water extinguishing system (1), and
- aborting (140) the test run by way of actuation of a shut-off member (4) in the test line (40) upon receipt of the trigger signal.

13. Method according to Claim 12, furthermore comprising
- actuating a distributor pipe shut-off member (3) in a distributor pipe (50) of the water extinguishing system in order to interrupt a fluid flow through the distributor pipe (50), and
- actuating the distributor pipe shut-off member (3) again in order to release the fluid flow through a distributor pipe (50) again; and/or
- storing and evaluating (120) measurement values of at least one sensor arranged in or at the test line (40).

14. Method according to either of Claims 12 and 13, wherein starting the test run comprises actuating the opening member (2) of a test line (40).

## Revendications

1. Système d'extinction à eau (1), comprenant
- une alimentation en fluide (20) destinée à fournir un fluide d'extinction,
- une pompe (30) qui est conçue pour acheminer le fluide d'extinction de l'alimentation en fluide (20) jusque dans un tuyau de distribution (50),
- une conduite de test (40), qui dérive du tuyau de distribution (50) et qui est conçue pour conduire le fluide d'extinction délivré par la pompe (30),
la conduite de test (40) comportant un organe d'ouverture (2) qui est conçu pour ouvrir la conduite de test (40) pendant un test de la pompe (30),
la conduite de test (40) comportant un organe d'isolement (4) qui est conçu pour fermer la conduite de test (40) lorsque le système d'extinction à eau (1) est déclenché ;
**caractérisé en ce que** le système d'extinction à eau (1) comprend en outre une unité de commande (12) qui est conçue pour commander un test automatique de la pompe (30), interrompre le test automatique lorsque le système d'extinction à eau (1) est déclenché et fermer la conduite de test (40) au moyen de l'organe d'isolement (4).

2. Système d'extinction à eau (1) selon la revendication 1, l'organe d'isolement (4) étant conçu pour passer, lorsque le système d'extinction à eau (1) est déclenché, d'une position de déblocage à une position de blocage dans laquelle l'organe d'isolement (4) ferme la conduite de test (40), la position de blocage correspondant à une position de base énergétiquement favorable de l'organe d'isolement (4).

3. Système d'extinction à eau (1) selon les revendications 1 ou 2, le tuyau de distribution (50) comportant un organe d'isolement de tuyau de distribution (3) qui est conçu pour interrompre un flux de fluide à travers le tuyau de distribution (50) pendant un test de la pompe (30), l'organe d'isolement de tuyau de distribution (3) étant également conçu pour libérer le flux de fluide à travers le tuyau de distribution (50) lorsque le système d'extinction à eau (1) est déclenché.

4. Système d'extinction à eau (1) selon l'une des revendications précédentes, l'organe d'ouverture (2) et/ou l'organe d'isolement (4) et/ou l'organe d'isolement de tuyau de distribution (3) étant commandés automatiquement.

5. Système d'extinction à eau (1) selon l'une des revendications précédentes, le système d'extinction à eau (1) comprenant en outre un interrupteur de déclenchement (62, 64, 66), le premier interrupteur de déclenchement (62, 64, 66) étant conçu pour fermer la conduite de test (40) à l'aide de l'organe d'isolement (4) lorsque le système d'extinction à eau (1) est déclenché.

6. Système d'extinction à eau (1) selon la revendication 5,
le système d'extinction à eau (1) comportant une soupape d'alarme (60), la soupape d'alarme (60) comportant l'interrupteur de déclenchement (62, 64) ; ou
l'interrupteur de déclenchement (66) étant situé sur le tuyau de distribution (50) après la dérivation (42) de la conduite de test (40).

7. Système d'extinction à eau (1) selon l'une des revendications précédentes, qui comporte en outre une centrale d'alarme d'incendie et/ou de commande d'extinction (10), la centrale d'alarme d'incendie et/ou de commande d'extinction (10) étant conçue pour fermer la conduite de test (40) à l'aide de l'organe d'isolement (4) lorsque le système d'extinction à eau est déclenché.

8. Système d'extinction à eau (1) selon l'une des revendications 2 à 7, l'organe d'isolement (4) et/ou l'organe d'isolement de tuyau de distribution (3) étant conçus avec l'un au moins des dispositifs de fermeture suivants :
- une vanne déluge,
- une électrovanne pilotée,
- une électrovanne à commande directe et
- un robinet-vanne motorisé à sécurité intégrée ; de préférence
le déclenchement de l'organe d'isolement (4) et/ou de l'organe d'isolement de tuyau de distribution (3) comportant un déclenchement hydraulique, pneumatique, électrique et/ou pneumatique-électrique.

9. Système d'extinction à eau (1) selon l'une des revendications précédentes, l'unité de commande (12) étant conçue pour libérer le flux de fluide à travers le tuyau de distribution (50) à l'aide de l'organe d'isolement de tuyau de distribution (5) lorsque le système d'extinction à eau (1) est déclenché.

10. Unité de commande (12) destinée à commander un test de pompe automatique d'un système d'extinction à eau (1), en particulier un système d'extinction à eau (1) selon l'une des revendications précédentes, l'unité de commande (12) étant conçue pour :
- démarrer un test automatique de la pompe (30),
- recevoir un signal de déclenchement indiquant un déclenchement du système d'extinction à eau (1), et
- interrompre le test par activation d'un organe d'isolement (4) de la conduite de test (40) lorsque le signal de déclenchement est reçu.

11. Unité de commande (12) selon la revendication 10, l'unité de commande (12) étant en outre conçue pour :
- activer un organe d'isolement de tuyau de distribution (3) dans un tuyau de distribution (50) du système d'extinction à eau, l'organe d'isolement de tuyau de distribution (3) étant conçu pour interrompre un flux de fluide à travers le tuyau de distribution (50) en réponse à l'activation, et
- activer à nouveau l'organe d'isolement de tuyau de distribution (3), l'organe d'isolement de tuyau de distribution (3) étant conçu pour libérer à nouveau le flux de fluide à travers un tuyau de distribution (50) du système d'extinction à eau en réponse à la nouvelle activation ; et/ou
- mémoriser et évaluer des valeurs de mesure d'au moins un capteur disposé dans ou sur la conduite de test (40).

12. Procédé de commande d'un système d'extinction à eau (1), notamment d'un système d'extinction à eau (1) selon l'une des revendications 1 à 10, ledit procédé comprenant la réalisation d'un test d'une pompe (30) du système d'extinction à eau (1), le procédé (100) comprenant les étapes suivantes :
- démarrer le test de la pompe,
- recevoir (130) un signal de déclenchement indiquant un déclenchement du système d'extinction à eau (1), et
- interrompre (140) le test par activation d'un organe d'isolement (4) dans la conduite de test (40) lorsque le signal de déclenchement est reçu.

13. Procédé selon la revendication 12, comprenant en outre les étapes suivantes
- activer un organe d'isolement de tuyau de distribution (3) dans un tuyau de distribution (50) du système d'extinction à eau afin d'interrompre un flux de fluide à travers le tuyau de distribution (50), et
- activer à nouveau l'organe d'isolement de tuyau de distribution (3) afin de libérer à nouveau le flux de fluide à travers un tuyau de distribution (50) ; et/ou
- mémoriser et évaluer (120) des valeurs de mesure d'au moins un capteur disposé dans ou sur la conduite de test (40).

14. Procédé selon l'une des revendications 12 ou 13, le démarrage du test comprenant l'activation de l'organe d'ouverture (2) d'une conduite de test (40).
